# EUROPEAN PATENT APPLICATION

(11) **EP 4 614 931 A1**
(43) Date of publication of application: **10.09.2025**
(21) Application number: 23893142.2
(22) Date of filing: 29.06.2023
(51) Int. Cl.: H04L 45/02

(54) **COMMUNICATION METHOD FOR SD-WAN, MESSAGE PROCESSING METHOD, AND NETWORK DEVICE**

(30) Priority: 22.11.2022 CN 202211474204
(71) Applicant: Huawei Technologies Co., Ltd., Shenzhen, Guangdong 518129 (CN)
(72) Inventor: DONG, Lin, Shenzhen, Guangdong 518129 (CN)
(74) Representative: Goddar, Heinz J.
(86) International application number: PCT/CN2023/103587
(87) International publication number: WO 2024/109042

(57) **Abstract**

A communication method for an SD-WAN is provided. The method may include: A first node obtains SD-WAN overlay topology information; obtains a first SD-WAN overlay locator route advertised by a second node, where the first SD-WAN overlay locator route includes a first locator configured by the second node at an overlay layer; and obtains, based on the first SD-WAN overlay locator route and the SD-WAN overlay topology information, a software-defined wide area network overlay segment routing SD-WAN overlay SR BE path arriving at the second node. An SD-WAN tunnel is abstracted as a link and an SD-WAN overlay topology is generated, so that an SD-WAN device can independently compute an SD-WAN overlay SR BE path at the overlay layer without depending on an underlay network.

## Description

This application claims priority to Chinese Patent Application No. 202211474204.X, filed with the China National Intellectual Property Administration on November 22, 2022 and entitled "COMMUNICATION METHOD FOR SD-WAN, PACKET PROCESSING METHOD, AND NETWORK DEVICE", which is incorporated herein by reference in its entirety.

### TECHNICAL FIELD

The present invention relates to the field of communication technologies, and in particular, to a communication method for an SD-WAN, a packet processing method, and a network device.

### BACKGROUND

A software-defined wide area network (software-defined WAN, SD-WAN) is important practice of software-defined networking (software-defined networking, SDN). A controller is introduced, and network, security, wide area network optimization, and other technologies are integrated, to implement enterprise wide area network (Wide Area Network, WAN) configuration and automatic service provisioning, and provide an easy, flexible, and high-quality enterprise WAN interconnection capability.

An existing SD-WAN solution can provide a method for dynamically setting up an overlay (overlay) network tunnel between sites, but cannot support setup of a tunnel with a path programming capability between sites crossing a plurality of carrier networks. Therefore, a path orchestration capability of segment routing (Segment Routing, SR) further needs to be introduced based on the SD-WAN. However, existing SR technologies (for example, SRv6) all need to depend on network routing protocols of an underlay (underlay) network, and is only suitable for setting up an SR tunnel on a private multi-protocol label switching (Multi-protocol Label Switching, MPLS) network or an IPv6 network, but cannot support an inter-carrier network and an IPv4 network.

### SUMMARY

This application provides a communication method for an SD-WAN, a packet processing method, and a network device.

According to a first aspect, this application provides a communication method for a software-defined wide area network SD-WAN. The method includes: A first node obtains SD-WAN overlay topology information; obtains a first SD-WAN overlay locator route advertised by a second node, where the first SD-WAN overlay locator route includes a first locator configured by the second node at an overlay layer; and obtains, based on the first SD-WAN overlay locator route and the SD-WAN overlay topology information, a software-defined wide area network overlay segment routing SD-WAN overlay SR BE path arriving at the second node.

In other words, after obtaining the SD-WAN overlay topology information and the SD-WAN overlay locator route advertised by the second node, the first node may compute, in an SD-WAN overlay topology, the SD-WAN SR BE path arriving at the second node, that is, generating an SR BE tunnel at the overlay layer. Therefore, when communication is performed at the overlay layer, each node in the SD-WAN can independently compute an overlay path without depending on a controller and an underlay network.

In a possible implementation, the method further includes: The first node advertises a second SD-WAN overlay locator route, where the second SD-WAN overlay locator route includes a second locator configured by the first node at the overlay layer.

In other words, each node in an SD-WAN overlay SR network needs to be configured with a locator at the overlay layer, and the locator is advertised in the SD-WAN overlay SR network, so that another node can access, via the locator, a node that advertises the locator route.

In a possible implementation, both the first node and the second node are edge nodes, and the method further includes: The first node receives a first virtual private network VPN route sent by the second node, where the first VPN route includes a first virtual private network segment identifier VPN SID, and the first VPN SID is a SID allocated by the second node in the first locator.

In a possible implementation, the method further includes: The first node iterates the first SD-WAN overlay locator route based on the first VPN SID, to obtain forwarding information of the SD-WAN overlay SR BE path.

In other words, when the first node and the second node are edge nodes, the first node may receive a VPN route that carries the VPN SID and that is advertised by the second node. Therefore, when sending a packet to the second node, the first node may iterate the first SD-WAN overlay locator route to the SD-WAN overlay locator route of the second node based on the VPN SID included in the VPN route, to obtain the forwarding information of the SD-WAN overlay SR BE path from the first node to the second node.

In a possible implementation, both the first node and the second node are edge nodes, and the method further includes: The first node allocates a second VPN SID in a locator of the first node; and sends a second VPN route to the second node, where the second VPN route includes the second VPN SID.

In other words, in the SD-WAN overlay SR network, the edge node further needs to allocate, in the locator of the edge node, a VPN SID to a VPN route corresponding to a VPN instance bound to the edge node.

In a possible implementation, before the first node obtains the SD-WAN overlay topology information, the method further includes: The first node allocates, in the locator of the first node, a corresponding link segment identifier link SID to each SD-WAN tunnel associated with the first node; and allocates, in the locator of the first node, a node identifier node SID to the first node.

In other words, in an SR-TE mode, each node (including the first node) in the SD-WAN overlay SR network needs to allocate, in the locator, a node identifier node SID to the node and a link segment identifier link SID to an SD-WAN tunnel associated with the node.

In a possible implementation, the method further includes: The first node sends the SD-WAN overlay topology information to the controller.

In a possible implementation, the method further includes: The first node receives an SD-WAN overlay SR policy sent by the controller, where the SD-WAN overlay SR policy includes a segment identifier list SID list corresponding to the SD-WAN overlay SR path.

In other words, in the SR-TE mode, the first node may send, to the controller, the SD-WAN overlay topology information obtained by the first node, so that the controller determines an end-to-end SR policy in the SD-WAN overlay SR network based on the SD-WAN overlay topology information.

In a possible implementation, the SD-WAN overlay SR policy is an SD-WAN overlay SR TE policy.

In a possible implementation, the SD-WAN overlay SR policy is an SD-WAN overlay SRv6 policy.

In a possible implementation, the first node and the second node are separated by at least one POP node.

In a possible implementation, the method further includes: The first node receives a third SD-WAN overlay locator route sent by a third node, where the third SD-WAN overlay locator route includes a third locator configured by the third node at the overlay layer.

In other words, in the SD-WAN overlay SR network, the first node may obtain SD-WAN overlay locator routes sent by a plurality of other nodes.

In a possible implementation, the first locator corresponds to a space segment identified by a number or a network segment identified by an IPv6 address.

In a possible implementation, the SD-WAN overlay topology information includes node information of an SD-WAN tunnel and link information of the SD-WAN tunnel.

In other words, the SD-WAN overlay topology information includes the node information of the SD-WAN and a connection relationship of the SD-WAN tunnel between the nodes, and may further include overheads and attribute information of a link of the SD-WAN tunnel.

In a possible implementation, the node information of the SD-WAN tunnel includes node SID information of the SD-WAN tunnel, and the link information of the SD-WAN tunnel includes link SID information of the SD-WAN tunnel.

In other words, in the SR-TE mode, the node information of the SD-WAN may further include a node identifier, and the link information of the SD-WAN tunnel may further include a link identifier.

In a possible implementation, the first node obtains the SD-WAN overlay topology information via a border gateway protocol BGP packet.

In other words, the first node may obtain the SD-WAN overlay topology information via an extended BGP packet.

In a possible implementation, the BGP packet is a BGP shortest path first BGP-SPF protocol packet or a BGP link-state protocol BGP-LS protocol packet.

In other words, when obtaining the SD-WAN overlay topology information via the BGP packet, the first node may obtain the SD-WAN overlay topology information via the BGP-LS protocol packet or the BGP-SPF packet. In other words, when the BGP packet is extended, the BGP-LS packet or the BGP-SPF packet may be extended.

In a possible implementation, the BGP packet includes first network layer reachability information NLRI and second network layer reachability information NLRI, the first NLRI is used to carry the node information of the SD-WAN tunnel, and the second NLRI is used to carry the link information of the SD-WAN tunnel.

In other words, when obtaining the SD-WAN overlay topology information via the BGP packet, the first node may obtain the SD-WAN overlay topology information based on the information carried in the NLRI of the BGP packet. The BGP packet includes two types of NLRI information. The first type of NLRI information may carry the node information of the SD-WAN tunnel, and the second NLRI may carry the link information of the SD-WAN tunnel.

In a possible implementation, the node information of the SD-WAN tunnel includes a local node identifier of the SD-WAN tunnel and a remote node identifier of the SD-WAN tunnel.

In a possible implementation, the node information of the SD-WAN tunnel further includes local transport network port TNP information and remote TNP information of the SD-WAN tunnel.

In a possible implementation, the link information of the SD-WAN tunnel includes one or more of the following: a link identifier of the SD-WAN tunnel, link quality of the SD-WAN tunnel, and a status of the SD-WAN tunnel.

According to a second aspect, this application provides a software-defined wide area network SD-WAN communication method, including: A controller obtains SD-WAN overlay topology information; obtains an SD-WAN overlay SR policy based on the SD-WAN overlay topology information, where the SD-WAN overlay SR policy includes: a SID list corresponding to an SD-WAN overlay SR path; and sends the SD-WAN overlay SR policy to a first node.

In other words, in an SR-TE mode, the controller obtains SD-WAN overlay topology information sent by any node in an SD-WAN overlay SR network. After obtaining the SD-WAN overlay topology information, the controller may determine an end-to-end SR policy in the SD-WAN overlay SR network based on the SD-WAN overlay topology information. Then, the controller may send the SD-WAN policy to a head node of an SD-WAN policy tunnel.

In a possible implementation, the SD-WAN overlay SR policy is an SD-WAN overlay SR TE policy.

In a possible implementation, the SD-WAN overlay SR policy is an SD-WAN overlay SRv6 policy.

In a possible implementation, the SD-WAN overlay topology information includes node information of an SD-WAN tunnel and link information of the SD-WAN tunnel.

In a possible implementation, the node information of the SD-WAN tunnel includes node SID information of the SD-WAN tunnel.

The link information of the SD-WAN tunnel includes link SID information of the SD-WAN tunnel.

In a possible implementation, the first node obtains the SD-WAN overlay topology information via a border gateway protocol BGP packet.

In a possible implementation, the BGP packet is a BGP shortest path first BGP-SPF protocol packet or a BGP link-state protocol BGP-LS protocol packet.

In a possible implementation, the BGP packet includes first network layer reachability information NLRI and second network layer reachability information NLRI, the first NLRI is used to carry the node information of the SD-WAN tunnel, and the second NLRI is used to carry the link information of the SD-WAN tunnel.

In a possible implementation, the node information of the SD-WAN tunnel includes a local node identifier of the SD-WAN tunnel and a remote node identifier of the SD-WAN tunnel.

In a possible implementation, the node information of the SD-WAN tunnel further includes local transport network port TNP information and remote TNP information of the SD-WAN tunnel.

In a possible implementation, the link information of the SD-WAN tunnel includes one or more of the following: a link identifier of the SD-WAN tunnel, link quality of the SD-WAN tunnel, and a status of the SD-WAN tunnel.

According to a third aspect, this application provides a packet processing method. The method includes: A first node obtains a virtual private network segment identifier VPN SID corresponding to a virtual private network VPN service packet; matches a SD-WAN overlay locator route based on the VPN SID, to obtain forwarding information of a software-defined wide area network overlay segment routing SD-WAN overlay SR BE path for forwarding the VPN service packet; and forwards the VPN service packet based on the forwarding information.

In other words, after receiving the VPN SID corresponding to the VPN service packet, the first node may iterate to the SD-WAN overlay locator route based on the VPN SID, to obtain forwarding information of the SD-WAN overlay SR BE path of the VPN service packet.

In a possible implementation, the VPN service packet includes the VPN SID.

In other words, when the first node is a transit forwarding node, the VPN service packet received by the first node carries the VPN SID.

In a possible implementation, before the first node forwards the VPN service packet based on the forwarding information, the method further includes: The first node encapsulates the VPN SID into a generic routing encapsulation GRE packet header of the VPN service packet.

In other words, when the first node is an edge node, after the first node obtains the VPN SID corresponding to the VPN service packet, the first node needs to encapsulate the VPN SID into the GRE header of the VPN service packet. Therefore, after receiving the VPN service packet, the transit forwarding node may directly obtain the VPN SID from the GRE header.

In a possible implementation, the GRE packet header includes a source route entry SRE, and the SRE is used to carry the VPN SID.

In other words, when the VPN SID is encapsulated into the GRE header, the VPN SID corresponding to the VPN service packet may be carried by adding the source route entry SRE to a "routing" field of the GRE packet header.

In a possible implementation, the VPN SID is an IPv6 address, and an IPv6 packet header of the GRE packet header is used to carry the VPN SID.

In other words, when the VPN SID is the IPv6 address, the IPv6 address of the GRE header may be directly reused when the VPN SID is encapsulated into the GRE header.

According to a fourth aspect, this application provides a packet processing method, including: A first node obtains a virtual private network segment identifier VPN SID corresponding to a virtual private network VPN service packet; obtains an SD-WAN overlay SR policy corresponding to the VPN service packet, where the SD-WAN overlay SR policy includes: a SID list corresponding to an SD-WAN overlay SR path; searches an SD-WAN overlay topology or an SD-WAN overlay locator route based on the VPN SID or the SID list that corresponds to the VPN service packet, to obtain forwarding information of the SD-WAN overlay SR path for forwarding the VPN service packet; and forwards the VPN service packet based on the forwarding information.

In other words, in an SR-TE mode, the first node needs to obtain the VPN SID and the SD-WAN overlay SR policy that correspond to the VPN service packet, and use the VPN SID and the SID list of the SD-WAN overlay SR policy together as a forwarding list of the VPN service packet. Then, the first node searches the SD-WAN overlay locator route or the SD-WAN overlay topology based on the SID to which the forwarding list points, to obtain the forwarding information of the VPN service packet.

In a possible implementation, the VPN service packet includes the VPN SID and the SID list.

In a possible implementation, before the first node forwards the VPN service packet based on the forwarding information, the method further includes: The first node encapsulates the VPN SID and the SID list into a generic routing encapsulation GRE packet header of the VPN service packet.

In a possible implementation, the GRE packet header includes a source route entry SRE, and the SRE is used to carry the VPN SID and the SID list.

In a possible implementation, the VPN SID and a SID in the SID list are IPv6 addresses, and an IPv6 address of the GRE packet header is used to carry the VPN SID and the SID list.

According to a fifth aspect, this application provides a communication method for a software-defined local area network SD-WAN. The method includes: A first node obtains first overlay tunnel information sent by a second node in an SD-WAN, where the first overlay tunnel information includes tunnel node information and tunnel link information of a first overlay tunnel; obtains second overlay tunnel information sent by a third node, where the second overlay tunnel information includes tunnel node information and tunnel link information of a second overlay tunnel; and obtains SD-WAN overlay topology information based on the first overlay tunnel information and the second overlay tunnel information.

In other words, the first node may obtain the SD-WAN overlay topology information by obtaining the overlay tunnel information sent by another node in an SD-WAN overlay SR network and the overlay tunnel information stored in the first node.

In a possible implementation, the SD-WAN overlay topology information includes node information of an SD-WAN tunnel and link information of the SD-WAN tunnel.

In a possible implementation, the node information of the SD-WAN tunnel includes node SID information of the SD-WAN tunnel, and the link information of the SD-WAN tunnel includes link SID information of the SD-WAN tunnel.

According to a sixth aspect, this application provides a first network device, including:
a communication module, configured to obtain SD-WAN overlay topology information, where
the communication module is further configured to obtain a first SD-WAN overlay locator route advertised by a second network device, where the first SD-WAN overlay locator route includes a first locator configured by the second network device at an overlay layer; and
a processing module, configured to obtain, based on the first SD-WAN overlay locator route and the SD-WAN overlay topology information, a software-defined wide area network overlay segment routing SD-WAN overlay SR BE path arriving at the second network device.

In a possible implementation, the communication module is further configured to advertise a second SD-WAN overlay locator route, where the second SD-WAN overlay locator route includes a second locator configured by the processing module at the overlay layer.

In a possible implementation, both the first network device and the second network device are edge network devices, and the communication module is further configured to receive a first virtual private network VPN route sent by the second network device, where the first VPN route includes a first virtual private network segment identifier VPN SID, and the first VPN SID is a SID allocated by the second network device in the first locator.

In a possible implementation, the processing module is further configured to iterate the first SD-WAN overlay locator route based on the first VPN SID, to obtain forwarding information of the SD-WAN overlay SR BE path.

In a possible implementation, both the first network device and the second network device are edge network devices, and the processing module is further configured to allocate a second VPN SID in a locator of the first node. The communication module sends a second VPN route to the second network device, where the second VPN route includes the second VPN SID.

In a possible implementation, before the communication module obtains the SD-WAN overlay topology information, the processing module is further configured to allocate, in the locator of the first network device, a corresponding link segment identifier link SID to each SD-WAN tunnel associated with the first network device, and allocate, in the locator of the first network device, a node identifier node SID to the first network device.

In a possible implementation, the communication module is further configured to send the SD-WAN overlay topology information to a controller.

In a possible implementation, the communication module is further configured to receive an SD-WAN overlay SR policy sent by the controller, where the SD-WAN overlay SR policy includes a segment identifier list SID list corresponding to the SD-WAN overlay SR path.

In a possible implementation, the SD-WAN overlay SR policy is an SD-WAN overlay SR TE policy.

In a possible implementation, the SD-WAN overlay SR policy is an SD-WAN overlay SRv6 policy.

In a possible implementation, the first network device and the second network device are separated by at least one POP device.

In a possible implementation, the communication module receives a third SD-WAN overlay locator route sent by a third network device, where the third SD-WAN overlay locator route includes a third locator configured by the third network device at the overlay layer.

In a possible implementation, the first locator corresponds to a space segment identified by a number or a network segment identified by an IPv6 address.

In a possible implementation, the SD-WAN overlay topology information includes node information of an SD-WAN tunnel and link information of the SD-WAN tunnel.

In a possible implementation, the node information of the SD-WAN tunnel includes node SID information of the SD-WAN tunnel, and the link information of the SD-WAN tunnel includes link SID information of the SD-WAN tunnel.

In a possible implementation, the communication module obtains the SD-WAN overlay topology information via a border gateway protocol BGP packet.

In a possible implementation, the BGP packet is a BGP shortest path first BGP-SPF protocol packet or a BGP link-state protocol BGP-LS protocol packet.

In a possible implementation, the BGP packet includes first network layer reachability information NLRI and second network layer reachability information NLRI, the first NLRI is used to carry the node information of the SD-WAN tunnel, and the second NLRI is used to carry the link information of the SD-WAN tunnel.

In a possible implementation, the node information of the SD-WAN tunnel includes a local node identifier of the SD-WAN tunnel and a remote node identifier of the SD-WAN tunnel.

In a possible implementation, the node information of the SD-WAN tunnel further includes local transport network port TNP information and remote TNP information of the SD-WAN tunnel.

In a possible implementation, the link information of the SD-WAN tunnel includes one or more of the following: a link identifier of the SD-WAN tunnel, link quality of the SD-WAN tunnel, and a status of the SD-WAN tunnel.

According to a seventh aspect, this application provides a first network device, including:
a communication module, configured to obtain SD-WAN overlay topology information; and
a processing module, configured to obtain an SD-WAN overlay SR policy based on the SD-WAN overlay topology information, where the SD-WAN overlay SR policy includes a SID list corresponding to an SD-WAN overlay SR path.

The communication module is further configured to send the SD-WAN overlay SR policy to a second network device.

In a possible implementation, the first network device is a controller.

In a possible implementation, the SD-WAN overlay SR policy is an SD-WAN overlay SR TE policy.

In a possible implementation, the SD-WAN overlay SR policy is an SD-WAN overlay SRv6 policy.

In a possible implementation, the SD-WAN overlay topology information includes node information of an SD-WAN tunnel and link information of the SD-WAN tunnel.

In a possible implementation, the node information of the SD-WAN tunnel includes node SID information of the SD-WAN tunnel.

The link information of the SD-WAN tunnel includes link SID information of the SD-WAN tunnel.

In a possible implementation, the communication module obtains the SD-WAN overlay topology information via a border gateway protocol BGP packet.

In a possible implementation, the BGP packet is a BGP shortest path first BGP-SPF protocol packet or a BGP link-state protocol BGP-LS protocol packet.

In a possible implementation, the BGP packet includes first network layer reachability information NLRI and second network layer reachability information NLRI, the first NLRI is used to carry the node information of the SD-WAN tunnel, and the second NLRI is used to carry the link information of the SD-WAN tunnel.

In a possible implementation, the node information of the SD-WAN tunnel includes a local node identifier of the SD-WAN tunnel and a remote node identifier of the SD-WAN tunnel.

In a possible implementation, the node information of the SD-WAN tunnel further includes local transport network port TNP information and remote TNP information of the SD-WAN tunnel.

In a possible implementation, the link information of the SD-WAN tunnel includes one or more of the following: a link identifier of the SD-WAN tunnel, link quality of the SD-WAN tunnel, and a status of the SD-WAN tunnel.

According to an eighth aspect, this application provides a first network device, including:
a communication module, configured to obtain a virtual private network segment identifier VPN SID corresponding to a virtual private network VPN service packet; and
a processing module, configured to match a SD-WAN overlay locator route based on the VPN SID, to obtain forwarding information of a software-defined wide area network overlay segment routing SD-WAN overlay SR path for forwarding the VPN service packet.

The communication module is further configured to forward the VPN service packet based on the forwarding information.

In a possible implementation, the VPN service packet includes the VPN SID.

In a possible implementation, before the communication module forwards the VPN service packet based on the forwarding information, the processing module is further configured to encapsulate the VPN SID into a generic routing encapsulation GRE packet header of the VPN service packet.

In a possible implementation, the GRE packet header includes a source route entry SRE, and the SRE is used to carry the VPN SID.

In a possible implementation, the VPN SID is an IPv6 address, and an IPv6 packet header of the GRE packet header is used to carry the VPN SID.

According to a ninth aspect, this application provides a first network device, including:
a communication module, configured to obtain a virtual private network segment identifier VPN SID corresponding to a virtual private network VPN service packet, where
the communication module is further configured to obtain an SD-WAN overlay SR policy corresponding to the VPN service packet, where the SD-WAN overlay SR policy includes a SID list corresponding to an SD-WAN overlay SR path; and
a processing module, configured to search an SD-WAN overlay topology or an SD-WAN overlay locator route based on the VPN SID or the SID list that corresponds to the VPN service packet, to obtain forwarding information of the SD-WAN overlay SR path for forwarding the VPN service packet.

The processing module is further configured to forward the VPN service packet based on the forwarding information.

In a possible implementation, the VPN service packet includes the VPN SID and the SID list.

In a possible implementation, before the communication module forwards the VPN service packet based on the forwarding information, the processing module is further configured to encapsulate the VPN SID and the SID list into a generic routing encapsulation GRE packet header of the VPN service packet.

In a possible implementation, the GRE packet header includes a source route entry SRE, and the SRE is used to carry the VPN SID and the SID list.

In a possible implementation, the VPN SID and a SID in the SID list are IPv6 addresses, and an IPv6 address of the GRE packet header is used to carry the VPN SID and the SID list.

According to a tenth aspect, this application provides a first network device, including:
a communication module, configured to obtain first overlay tunnel information sent by a second network device in the SD-WAN, where the first overlay tunnel information includes tunnel node information and tunnel link information of a first overlay tunnel, where
the communication module is further configured to obtain second overlay tunnel information sent by a third network device, where the second overlay tunnel information includes tunnel node information and tunnel link information of a second overlay tunnel; and
a processing module, configured to obtain the SD-WAN overlay topology information based on the first overlay tunnel information and the second overlay tunnel information.

In a possible implementation, the SD-WAN overlay topology information includes node information of an SD-WAN tunnel and link information of the SD-WAN tunnel.

In a possible implementation, the node information of the SD-WAN tunnel includes node SID information of the SD-WAN tunnel, and the link information of the SD-WAN tunnel includes link SID information of the SD-WAN tunnel.

According to an eleventh aspect, this application provides a computer-readable medium. The computer storage medium stores instructions, and when the instructions are run on a computer, the computer is enabled to perform the method described in any possible implementation of the first aspect, the second aspect, the third aspect, the fourth aspect, or the fifth aspect.

According to a twelfth aspect, this application provides a computer program product including instructions. When the instructions are run on a computer, the computer is enabled to perform the method described in any possible implementation of the first aspect, the second aspect, the third aspect, the fourth aspect, or the fifth aspect.

It may be understood that, for beneficial effect of the sixth aspect to the twelfth aspect, refer to related descriptions in the first aspect, the second aspect, the third aspect, the fourth aspect, or the fifth aspect. Details are not described herein again.

According to a thirteenth aspect, this application provides a network device, including:
a memory, configured to store a program; and
a processor, configured to execute the program stored in the memory, and when the program stored in the memory is executed, the processor is configured to perform the method described in any implementation of the first aspect, the method described in any implementation of the second aspect, the method described in any implementation of the third aspect, the method described in any implementation of the fourth aspect, or the method described in any implementation of the fifth aspect.

According to a fourteenth aspect, this application provides a communication system, including a first node and a second node.

The first node is configured to perform all or some operations performed by the first node in any aspect and any possible implementation.

The second node is configured to perform all or some operations performed by the second node in any aspect and any possible implementation.

In a specific implementation, the communication system further includes a controller, and the controller is configured to perform all or some operations performed by the controller in any aspect and any possible implementation.

### BRIEF DESCRIPTION OF DRAWINGS

FIG. 1 is a diagram of a format of an SRv6 packet according to an embodiment of this application;
FIG. 2 is a diagram of an architecture of an SD-WAN according to an embodiment of this application;
FIG. 3 is a diagram of a process of setting up an SD-WAN tunnel according to an embodiment of this application;
FIG. 4 is a schematic flowchart of setting up an end-to-end SRv6-BE tunnel according to an embodiment of this application;
FIG. 5 is a flowchart of a packet forwarding method in an SD-WAN overlay SR network according to an embodiment of this application;
FIG. 6a is a diagram of an architecture of an SD-WAN according to an embodiment of this application;
FIG. 6b is a diagram of a hardware structure of a switch according to an embodiment of this application;
FIG. 7 is a schematic flowchart of a communication method for an SD-WAN according to an embodiment of this application;
FIG. 8 is a diagram of a structure of an SD-WAN according to an embodiment of this application;
FIG. 9 is a diagram of a structure of an SD-WAN according to an embodiment of this application;
FIG. 10a is a diagram of an overlay topology stored in each node in an SD-WAN according to an embodiment of this application;
FIG. 10b is a diagram of an overlay topology in an SD-WAN overlay SR network according to an embodiment of this application;
FIG. 11 is a diagram of an SD-WAN overlay SR path in an SD-WAN according to an embodiment of this application;
FIG. 12 is a diagram of an overlay route stored in each node in an SD-WAN according to an embodiment of this application;
FIG. 13 is a schematic flowchart of a packet processing method according to an embodiment of this application;
FIG. 14a is a diagram of GRE-based packet encapsulation according to an embodiment of this application;
FIG. 14b is a diagram of a structure of a GRE packet header according to an embodiment of this application;
FIG. 14c is a diagram of packet forwarding in an SR-BE mode in an SD-WAN overlay SR network according to an embodiment of this application;
FIG. 15a is a diagram of GRE-based packet encapsulation according to an embodiment of this application;
FIG. 15b is a diagram of a structure of a GRE packet header according to an embodiment of this application;
FIG. 15c is a diagram of packet forwarding in an SR-BE mode in an SD-WAN overlay SR network according to an embodiment of this application;
FIG. 16 is a schematic flowchart of a communication method for an SD-WAN according to an embodiment of this application;
FIG. 17a is a diagram of locator address space configured by each node, in an SD-WAN, at an overlay layer according to an embodiment of this application;
FIG. 17b is a diagram of an overlay route stored in each node in an SD-WAN according to an embodiment of this application;
FIG. 18a is a diagram of an overlay topology stored in each node in an SD-WAN according to an embodiment of this application;
FIG. 18b is a diagram of an overlay topology in an SD-WAN overlay SR network according to an embodiment of this application;
FIG. 19 is a diagram of a structure of an SD-WAN according to an embodiment of this application;
FIG. 20 is a diagram of a structure of an SD-WAN according to an embodiment of this application;
FIG. 21 is a flowchart of a packet processing method according to an embodiment of this application;
FIG. 22 is a diagram of packet forwarding in an SR-TE mode in an SD-WAN overlay SR network according to an embodiment of this application;
FIG. 23 is a diagram of a format of a type of NLRI according to an embodiment of this application;
FIG. 24 is a diagram of a format of link-state NLRI according to an embodiment of this application;
FIG. 25 is a diagram of a structure of a sub-TLV of node information according to an embodiment of this application;
FIG. 26 is a diagram of a format of link-state NLRI according to an embodiment of this application;
FIG. 27 is a diagram of a structure of a TLV of a local TNP according to an embodiment of this application;
FIG. 28 is a diagram of a structure of a TNP descriptor according to an embodiment of this application;
FIG. 29 is a diagram of a structure of a TLV of BGP-SPF node Attr according to an embodiment of this application;
FIG. 30 is a schematic flowchart of a communication method for an SD-WAN according to an embodiment of this application;
FIG. 31 is a schematic flowchart of a communication method for an SD-WAN according to an embodiment of this application;
FIG. 32 is a schematic flowchart of a communication method for an SD-WAN according to an embodiment of this application;
FIG. 33 is a schematic flowchart of a packet processing method according to an embodiment of this application;
FIG. 34 is a schematic flowchart of a packet processing method according to an embodiment of this application;
FIG. 35 is a diagram of a structure of a network device according to an embodiment of this application; and
FIG. 36 is a diagram of a structure of a chip according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In the descriptions of embodiments of this application, any embodiment or design scheme described with words "example", "for example", or "in an example" should not be understood as being more preferred or having more advantages than another embodiment or design scheme. Specifically, use of the words such as "example" or "for example" is intended to present related concepts in a specific manner.

In addition, the terms "first" and "second" are merely used for a description purpose, and shall not be understood as indicating or implying relative importance or implicitly including indicated technical features. Therefore, a feature limited by "first" or "second" may explicitly or implicitly include one or more features. Terms "include", "have", "contain", and their variants all mean "include but are not limited to", unless otherwise specifically emphasized.

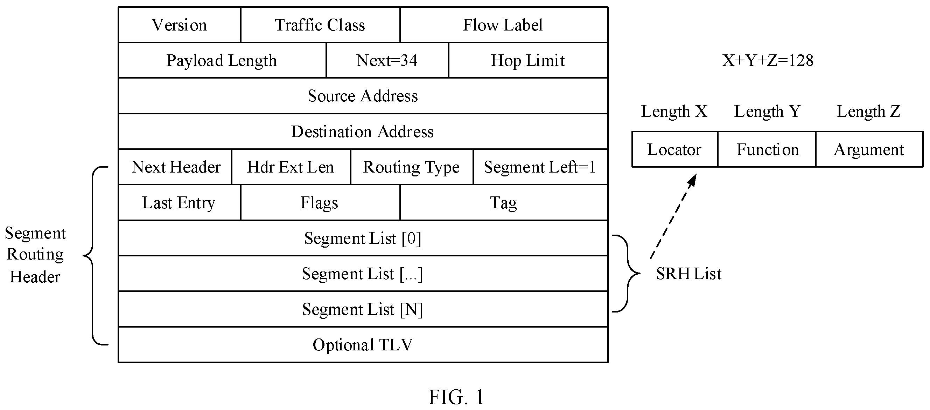

Before this solution is described, technical terms in this solution are first explained.
1. Segment routing (segment routing, SR): SR is a protocol designed based on source routing to forward a data packet in a network. SR is used to divide a network path into segments, and allocate segment identifiers IDs to the segments and forwarding nodes in the network. The segments and nodes in the network are arranged in order, to obtain a segment list (segment list) of a forwarding path. SR is used to encode the segment list that represents the forwarding path in a data packet header for transmission with the data packet. After receiving the data packet, a receive end parses the segment list. If a top segment identifier of the segment list is a current node, the identifier is popped out, and follow-up processing is performed. Alternatively, if a top segment identifier is not a current node, the data packet is forwarded to a next node in a conventional routing and forwarding manner.
2. Segment routing over IPv6 (segment routing over IPv6, SRv6): SRv6 is a method designed based on source routing to forward an IPv6 data packet in a network. SR based on an IPv6 forwarding plane implements hop-by-hop forwarding by inserting a routing extension header (segment routing header, SRH) into an IPv6 packet, pushing an explicit IPv6 address stack onto the SRH, and continuously updating a destination address and offsetting the address stack on a transit node. The SRv6 technology uses an existing IPv6 forwarding technology to implement network programmability based on a flexible IPv6 extension header. SRv6 defines some IPv6 addresses as instantiated SIDs (segment IDs). Each SID has an explicit function. Different SID operations are performed to implement a simplified VPN and flexible path planning. FIG. 1 shows a format of an SRv6 packet. The SRv6 packet carries an SRH, the SRH includes a plurality of segment lists, and each segment list includes a locator, a function, and an argument. The locator identifies information about a route to a node, and the function and the argument indicate a network function that needs to be performed on the node and a matching parameter. Lengths of the three parts: the locator, the function, and the argument are variable, but a total length of the three parts is less than 128 bits.
3. Locator: The locator is a locator identifying an SR node. Each node has at least one globally unique locator value used as a shared prefix of a local SID. Another node accesses a SID of the current node via a locator route. The locator value may be a numeric value or may be an IPv6 address.
4. Software-defined wide area network (software defined WAN, SD-WAN): The SD-WAN is important practice of software-defined networking (software-defined networking, SDN). A network controller is introduced, and network, security, and wide area network optimization technologies are integrated, to implement enterprise WAN configuration and automatic service provisioning, and provide an easy, flexible, and high-quality enterprise WAN interconnection capability. The SD-WAN usually has the following features:

### (1) Implementation of flexible IP overlay networking based on a hybrid WAN link

In the SD-WAN, an end-to-end overlay tunnel is set up between edges at two sites, so that the SD-WAN transport network and an underlay transport network are independent of each other. An underlay network link may be a dedicated multi-protocol label switching (multi-protocol label switching, MPLS) line, the public Internet, a long term evolution (long term evolution, LTE) network, or the like.

### (2) Intelligent application-based path selection ensuring application experience

Enterprise applications are classified into diverse types, including production, collaboration, cloud, and entertainment applications. Different types of applications have different requirements on bandwidth and link quality. In the SD-WAN, enterprise traffic is usually identified by using an application identification technology, for example, deep packet inspection (deep packet inspection, DPI), and then classification statistics, quality assessment, and path control are performed based on applications. In this way, high-value application traffic is prioritized for transmission over a high-quality but expensive path like MPLS, and low-value application traffic is directed over a low-quality but cost-effective path like the Internet.

### (3) Central control and visualization, and simple operation and maintenance

Based on central network monitoring and visualization, the central management is implemented, and efficiency of end-to-end WAN management and efficiency of operation and maintenance are improved.

5. Underlay network and overlay network: The underlay network is a conventional IT infrastructure network, and includes devices such as switches and routers. Driven by an Ethernet protocol, a routing protocol, a VLAN protocol, and the like, the underlay network is also an underlying network of the overlay network and provides a data communication service for the overlay network. The overlay network is a virtual network set up over the underlay network. The overlay network cannot exist alone, and the underlying network that the overlay network depends on is the underlay network.

The following describes the technical solutions in this application.

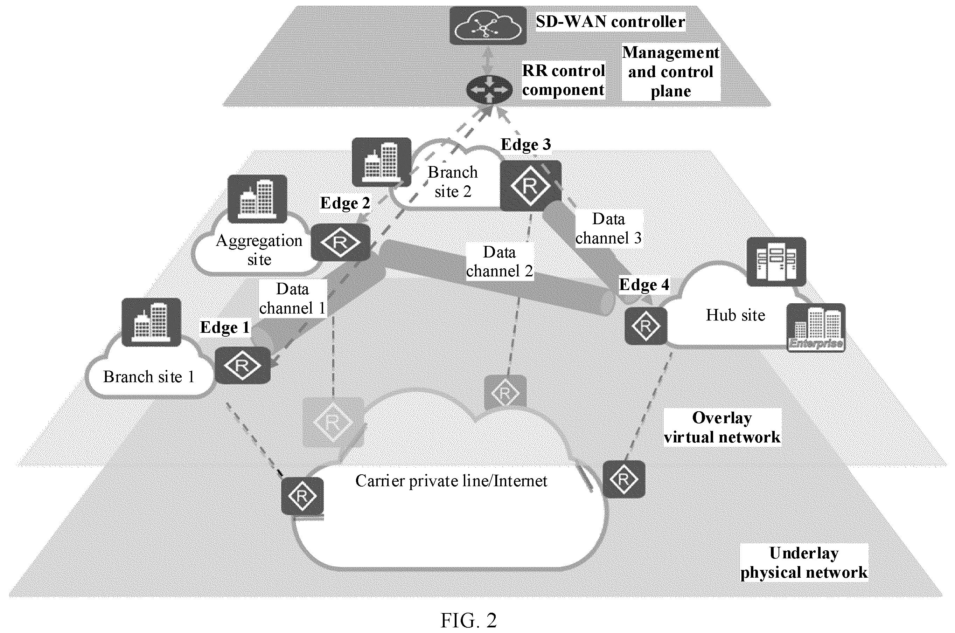

For example, FIG. 2 is a diagram of an architecture of an SD-WAN. As shown in FIG. 2, SD-WAN service forwarding may be controlled by a protocol of an RR control component on a management and control plane. An SD-WAN forwarding device uses the overlay IP tunneling technology to set up an overlay virtual network on a different underlay physical network. A source/destination IP of an overlay tunnel in the overlay virtual network is a WAN interface IP of an edge device. In a transit transport network, only a route to a link directly connected to the edge device needs to be advertised within the current network. In this way, in the underlay transport network, a tunnel packet can be forwarded through routing until the tunnel packet reaches a destination edge device.

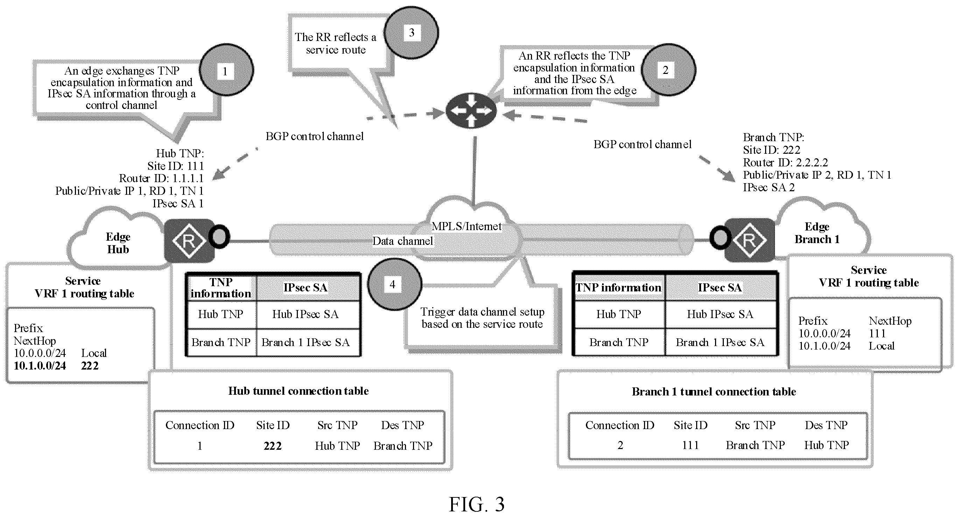

For example, FIG. 3 is a diagram of a process of setting up an SD-WAN tunnel. As shown in FIG. 3, the SD-WAN includes an edge device and an SD-WAN protocol control component RR. The edge device is further classified into a hub edge device and a branch edge device. A transport network port (Transport Network Port, TNP) is deployed for an interface of each WAN link by the hub edge device and the branch edge device, to generate a local TNP of the hub edge device or the branch edge device. The hub edge device and the branch edge device separately set up border gateway protocol (Border Gateway Protocol, BGP) neighbors with the RR. Then, the edge device (including the hub edge device and the branch edge device) encapsulates a route (which may also be referred to as a TNP route) through an SD-WAN tunnel extended in the BGP protocol, and reports local TNP information to the control component RR. The TNP information includes at least related information such as an interface IP required for encapsulation of an overlay outer IP and SA information required for IPsec data encryption.

After receiving the TNP information sent by the edge device, the control component RR needs to distribute the received TNP information to other edge devices. After receiving the TNP information sent by the control component RR, the edge device stores TNP information received from another site to a local TNP database, and denotes the TNP as a remote TNP.

The edge device reports an EVPN private network service route (next-hop information carried in a route message is a site identifier, namely, a site ID, of a transmit end) on a local user side to the control component RR via a BGP EVPN protocol set up with the control component RR. The control component RR then reflects the route to another edge device.

When the hub edge device learns the service route of the branch site, the hub edge device searches a remote TNP route database for remote TNPs learned from corresponding branch sites; one-to-one pairs the remote TNPs with local TNP routes, to form an SD-WAN tunnel virtual connection (tunnel virtual connection, TVC); and enables a tunnel state detection protocol on the tunnel connection. Conversely, after the branch edge device learns a service route of the hub site, the branch edge device pairs a local TNP with a TNP of the hub site, to form a TVC tunnel, and enables a tunnel state detection protocol on the tunnel connection. After the hub edge device and branch edge device receive the state detection protocols from each other, a tunnel connection state is up, indicating that the dynamic data tunnel is successfully set up, and may be used to perform a data forwarding service (for example, when a user host at 10.0.0.0/24 at the hub site needs to access a user host at 10.1.0.0/24 at the branch site, traffic is forwarded through the tunnel).

Although the solution shown in FIG. 3 can set up a dynamic overlay tunnel (namely, a TVC tunnel) in the SR network, in the foregoing solution, only one dynamic overlay tunnel can be set up between two sites based on the TNP route to the WAN link, an end-to-end tunnel with a path that can be orchestrated cannot be set up across a plurality of sites. Because a status of an end-to-end path cannot be sensed, when a part of the tunnel is faulty or quality of a part of the tunnel deteriorates, tunnels of other nodes cannot sense the fault or quality deterioration. Consequently, traffic is discarded when being forwarded to a transit node.

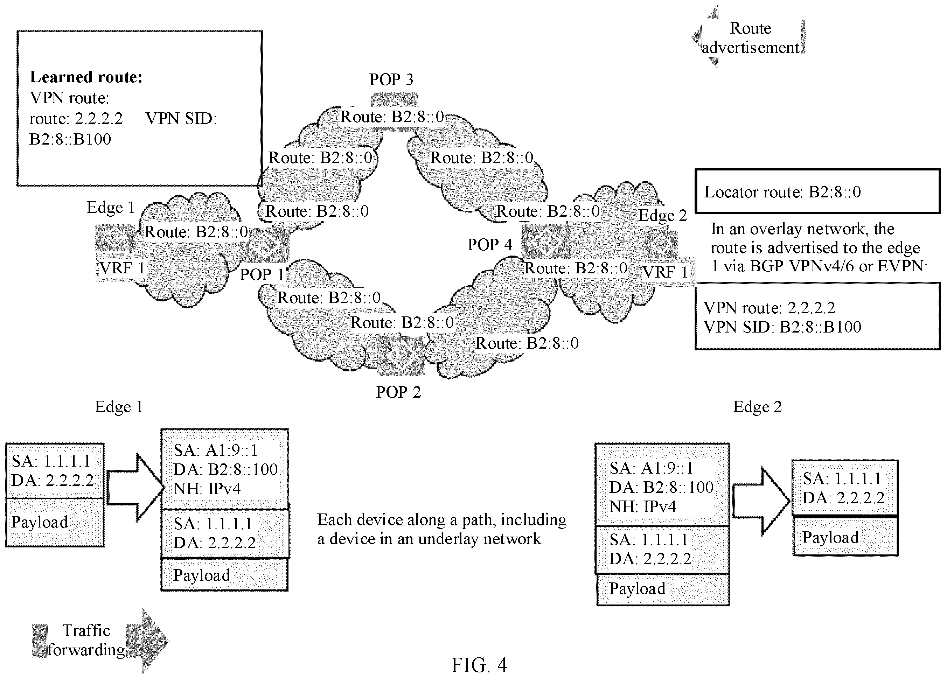

For example, FIG. 4 is a flowchart of a method for setting up an end-to-end SRv6-BE tunnel. As shown in FIG. 4, the following describes a method for setting up an end-to-end SRv6-BE tunnel between an edge node edge 1 and an edge node edge 2 based on an end-to-end SRv6-BE technology and by using L3 EVPN over SRv6 BE as an example. Establishing the end-to-end SRv6-BE tunnel between the edge 1 and the edge 2 includes two phases: a route advertisement phase and a data forwarding phase.

Route advertisement phase:
Step 401: The edge 2 is configured with a locator B2:8::0.
Step 402: The edge 2 advertises, to all devices in a network via an IGP protocol (for example, IS-ISv6), a locator network segment route B2:8::/64 corresponding to an SRv6 SID, and all the devices in the network put the route into IPv6 routing tables of the devices.
Step 403: The edge 2 configures a VPN instance: End.DT4 SID B2:8::100 in a locator range, and generates a local SID table, where the local SID table includes a VPN route: 2.2.2.2 and a VPN SID: B2:8::100.
Step 404: After the edge 2 receives a private network IPv4 route 2.2.2.2 advertised by an edge node CE 2 (not shown in FIG. 4) on a user side, the edge 2 converts the private network IPv4 route into a BGP VPNv4 route, and advertises the BGP VPNv4 route to the edge 1 via a BGP neighbor relationship, where a next hop of the route is the edge 1, and carries the VPN SID B2:8::100.
Step 405: After receiving the BGP VPNv4 route, the edge 1 interleaves the BGP VPNv4 route with a corresponding VPN instance routing table.
Step 406: After receiving the VPNv4 route, the edge 1 converts the VPNv4 route into a common IPv4 route, and advertises the common IPv4 route to an edge node CE 1 (not shown in FIG. 4) on the user side.

Data forwarding phase:
Step 407: The CE 1 sends an IPv4 packet to the edge 1, where a source IP of the IPv4 packet is 1.1.1.1, and a destination IP is 2.2.2.2.
Step 408: After receiving the IPv4 packet from an interface bound to the VPN instance, the edge 1 searches a routing and forwarding table corresponding to the VPN instance; matches a route to a destination IPv4 prefix, to obtain a VPN SID: B2:8::100 of a VPN route whose destination IP is 2.2.2.2; and uses B2:8::100 as a destination address of the IPv4 packet, and encapsulates the IPv4 packet into an IPv6 packet, where a source IP of the IPv6 packet is A1:9::1, and a destination IP of the IPv6 packet is B2:8::100.
Step 409: The edge 1 searches a route based on the destination IP of the IPv6 packet, and forwards the IPv6 packet to a POP 1.
Step 410: Transit nodes (the POP 1 to a POP 4) use a route B2::8 to forward the IPv6 packet.
Step 411: After the IPv6 packet arrives at the edge 2, the edge 2 search the local SID table based on the destination address B2:8::100 of the IPv6 packet, to hit an end SID; decapsulates the IPv6 packet; removes SRH information and an IPv6 packet header; restores the packet to the common IPv4 packet; searches, based on a destination address of the inner packet, the VPN instance routing table corresponding to the VPN SID; and forwards the packet to the CE 2 on the user side.

In an embodiment shown in FIG. 4, SRv6 is used to forward, on a forwarding plane, a SID, as a destination IP of a packet, allocated in a locator network segment. An IPv6 IGP routing protocol (for example, IS-ISv6/OSPFv3) is used to generate a network segment route for a locator prefix, and diffuse the route in an SR domain. If the edge device and a transit transport network cannot interconnect with the IPv6 IGP routing protocol, an SRv6 tunnel cannot be set up. In addition, for SRv6 BE, the IGP (IS-ISv6/OSPFv3) further needs to support SRv6 protocol extension, to collect link topology information (a SID, bandwidth, and a delay). If an IGP protocol of a transit device does not support SRv6 extension, end-to-end SRv6 BE cannot be run. Therefore, SRv6 essentially depends much on a routing protocol of an underlay network, and is applicable to setting up a tunnel in a private network that supports the IPv6 routing protocol. In addition, a source IP address of an SRv6 tunnel is specified on a header device and remains unchanged during forwarding on a network. If the tunnel crosses underlay networks of different routing domains, a packet may be discarded due to unicast reverse path forwarding (unicast reverse path forwarding, uRPF) check failures.

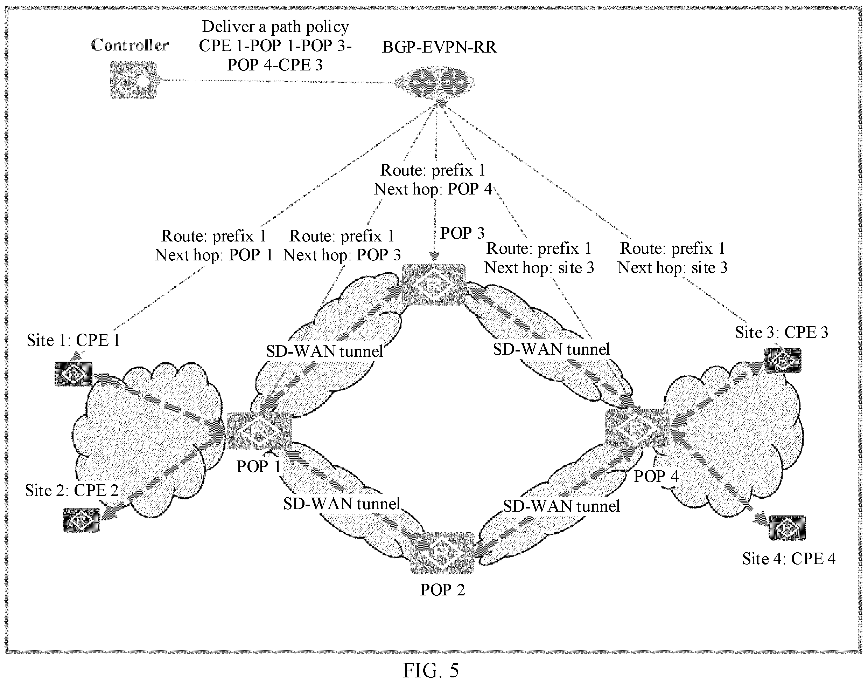

For example, FIG. 5 is a diagram of packet forwarding in an SD-WAN overlay SR network. As shown in FIG. 5, the SR network includes edge nodes: an edge 1 and an edge 2, transit forwarding nodes: a POP 1 to a POP 4, and a controller RR. The controller RR is responsible for collecting all topology information in an SD-WAN, generating information about a path (path policy) from the edge node edge 1 to the edge node edge 2 based on the topology information, and then delivering the path information to the edge 1. After receiving an EVPN route sent by a user side, the edge 1 changes a next hop of the route hop by hop according to the path policy delivered by the controller when reflecting the EVPN route to another SD-WAN site, to orchestrate a path.

In an embodiment shown in FIG. 5, an SD-WAN tunnel is set up hop by hop between the POP nodes, and the controller centrally computes a path of a user route, delivers the user route hop by hop at the POP nodes along the tunnel, and orchestrates a next-hop POP of the route. During traffic forwarding, SD-WAN encapsulation of a packet is terminated at each POP node, and a user path is searched for again. Orchestration of all paths in the SR network depends on the controller. Because a computing capability of the controller is limited, a networking scale of the SR network is limited. Further, after a topology in the SR network changes, re-orchestration by the controller is also required. Consequently, a response to a network topology change is slow, and reliability is affected. In addition, in the SD-WAN, during packet forwarding, each node needs to search a VPN route again, that is, each node needs to sense the VPN route, and each node on a forwarding path needs to store the VPN route.

An existing SD-WAN solution (the solution shown in FIG. 3) provides a method for dynamically setting up an overlay tunnel between sites, but cannot support setup of a tunnel with a path programming capability between sites crossing a plurality of carrier networks. Therefore, an SR path orchestration capability is expected to be introduced. However, existing SR technologies (for example, SRv6) all need to depend on network routing protocols of an underlay network, and is only suitable for setting up an SR tunnel on a private MPLS network or an IPv6 network, but cannot support an inter-carrier network and an IPv4 network. In an SD-WAN scenario, a transit transport network between two sites is usually a leased public IP network (for example, the Internet/5G) of a carrier. The network provides a route reachability service only for an interface IP of an edge device of the site, and does not allow the IGP routing protocol like IS-ISv6/OSPFv3 running between the edge device and a carrier underlay device. Even if the IGP routing protocol is allowed, it is difficult for different carriers to exchange the IGP protocol because SD-WAN underlay IP networks are usually provided by different carriers. Consequently, an SR tunnel packet cannot be directly forwarded based on the public underlay transport networks such as the Internet/5G, and overlay SR tunnels cannot be set up between sites.

In view of this, embodiments of this application provide a communication method, integrating an SR path programmability principle, for an SD-WAN based on an existing SD-WAN BGP EVPN dynamic tunnel setup capability. In the method, an SD-WAN overlay SR tunnel with a path programmability capability across a plurality of sites is set up, and setup of the tunnel does not depend on an underlay transport network protocol, but depends on a path computing capability of a device. This implements SD-WAN communication.

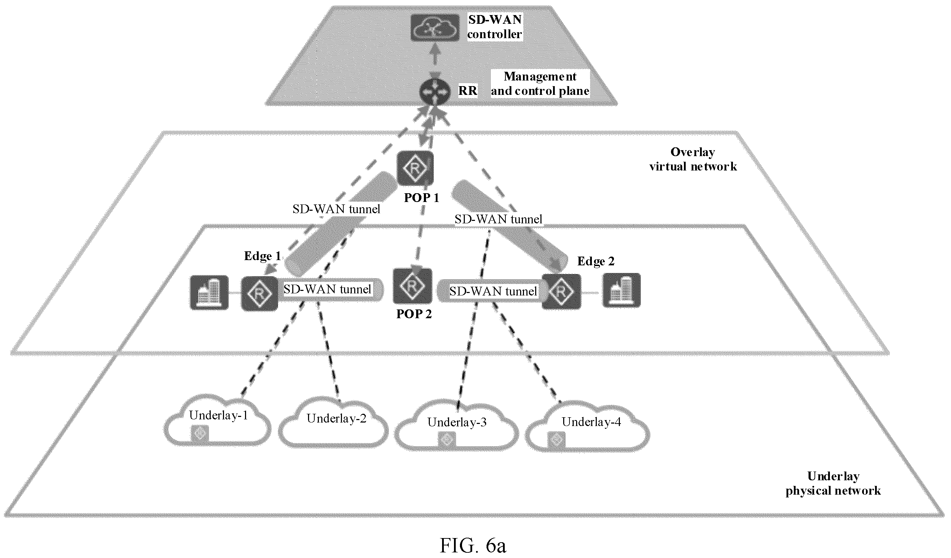

For example, FIG. 6a is a diagram of an architecture of an SD-WAN. As shown in FIG. 6a, the system mainly includes an underlay physical network, an overlay virtual network, and a management and control plane.

The management and control plane includes an SD-WAN controller and a route reflector (route reflector, RR). The SD-WAN controller is used to set up an orchestrate service and set up an SD-WAN tunnel. The controller RR serves as an SD-WAN network control component, and is responsible for collecting virtual network topologies between edges in the SD-WAN, distributing, filtering, and controlling user routes, and the like. It may be understood that the route reflection controller RR is an optional component.

The overlay network includes an edge device and a point of presence (point of presence, POP) device. The edge device is an edge SD-WAN device for user access. The POP device serves as a forwarding executor of an SD-WAN service, collects physical network topology information, performs tunnel encapsulation, encryption, and policy-based path selection on user traffic, and the like.

The underlay network is a conventional IT infrastructure network, and includes devices such as switches and routers. Driven by an Ethernet protocol, a routing protocol, a VLAN protocol, and the like, the underlay network is also an underlying network of the overlay network and provides a data communication service for the overlay network.

It may be understood that the POP device (node) described in embodiments of this application may be a network device with a data forwarding function, for example, a router or a switch. The edge device is a special POP device.

The following describes a hardware structure of the network device in embodiments of this application by using a switch as an example.

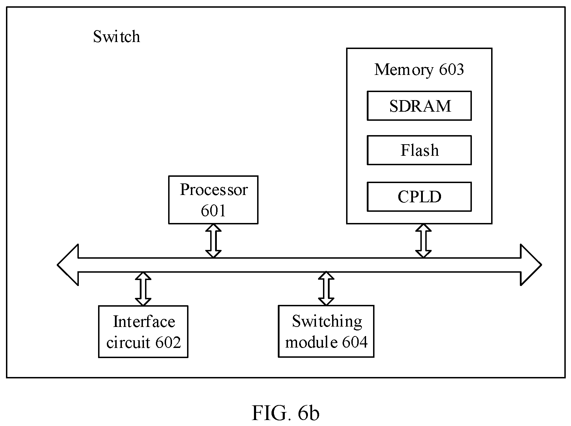

For example, FIG. 6b is a diagram of a hardware structure of a switch. As shown in FIG. 6b, the switch includes a processor 601, an interface circuit 602, a memory 603, and a switching module 606. The processor 601, the interface circuit 602, the memory 603, and the switching module 606 may be connected to each other through a bus.

The memory 603 is configured to store program instructions and data. For example, after receiving data sent by another switch, the switch may store the data in the memory 603. The processor 601 is a computing core and a control core of the switch. The processor 601 reads the program instructions and the data that are stored in the memory 603, to forward a packet. The interface circuit 602 includes an internal circuit that connects ports. The switching module 606 communicates with the processor 601 through the bus, to complete data transmission.

The following describes, based on content described in the foregoing, a communication method for an SD-WAN provided in embodiments of this application.

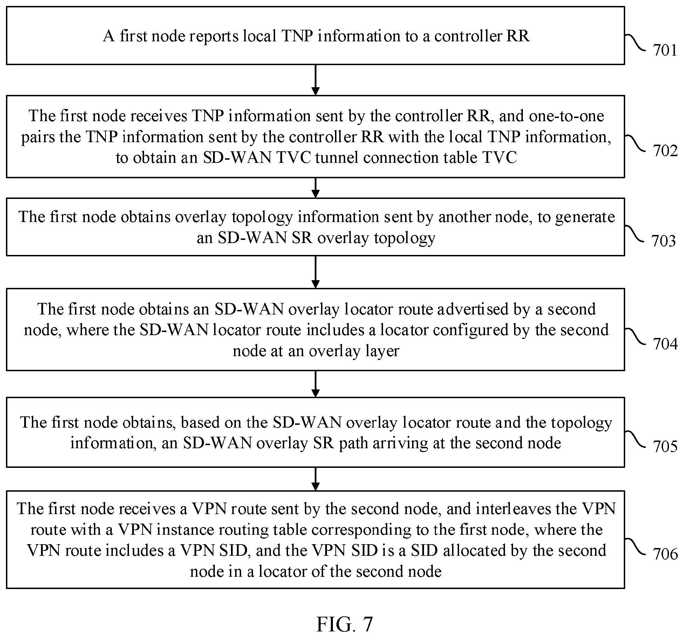

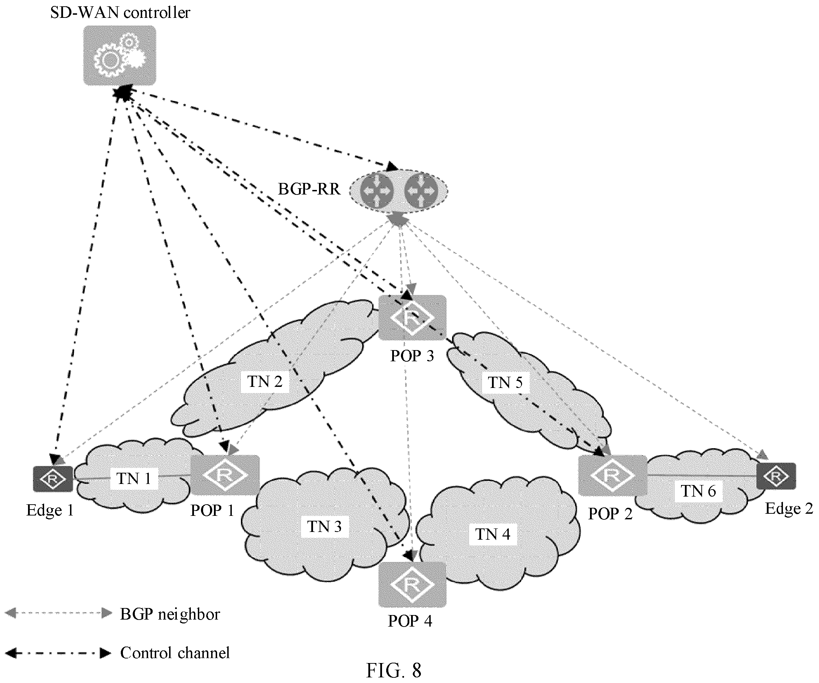

For example, FIG. 7 is a schematic flowchart of a communication method for an SD-WAN. The method may be applied to an SD-WAN overlay SR network shown in FIG. 8. As shown in FIG. 8, the network includes edge nodes: an edge 1 and an edge 2, transit forwarding nodes: a POP 1 to a POP 4, an SD-WAN controller, and a BGP route reflector BGP-RR. Any two nodes communicate with each other over a transport network (transport network, TN), and any node in the network may collect overlay topologies of the entire network via a BGP-SPF protocol. As shown in FIG. 7, the method includes step 701 to step 706, and the method is mainly applicable to an SR-BE mode.

Step 701: A first node reports local TNP information to a controller RR.

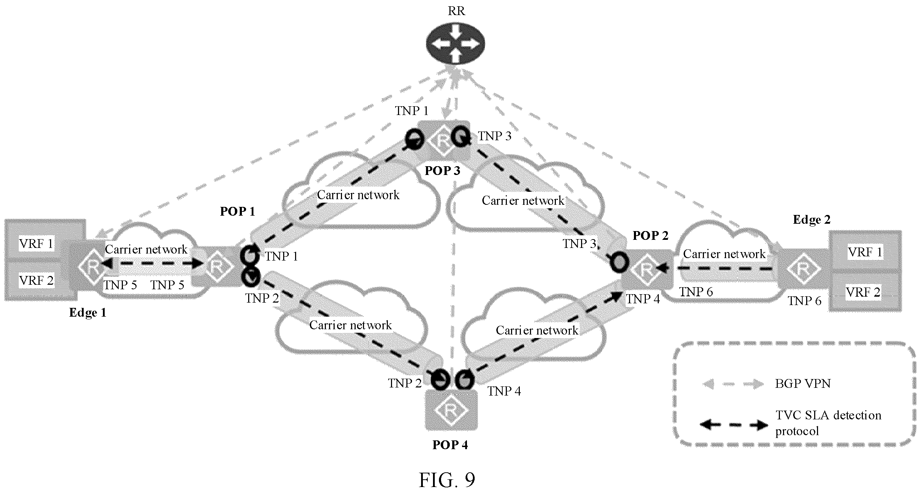

In this embodiment, the first node may be any node in the network shown in FIG. 8. The first node deploys a TNP for an interface of each WAN link associated with the first node, and generates a local TNP. As shown in FIG. 9, the edge 1 is associated with one WAN link, and a TNP 5 is deployed on the edge 1. The POP 1 is associated with three WAN links, and the POP 1 deploys TNPs: the TNP 5, a TNP 1, and a TNP 2 for the WAN links. The POP 3 is associated with two WAN links, and the POP 3 deploys TNPs: the TNP 1 and a TNP 3 for the WAN links. The POP 4 is associated with two WAN links, and the POP 4 deploys TNPs: the TNP 2 and a TNP 4 for the WAN links. The POP 2 is associated with three WAN links, and the POP 2 deploys TNPs: the TNP 3, the TNP 4, and a TNP 6 for the WAN links. The edge 2 is associated with one WAN link, and the TNP 5 is deployed on the edge 2.

The first node serves as a forwarding component of an SD-WAN service, and the first node needs to set up a BGP protocol neighbor with the RR. Then, the first node encapsulates a route (which may also be referred to as a TNP route) through an SD-WAN tunnel extended in a BGP protocol, and reports the local TNP information to the RR.

In a possible example, the local TNP information includes related information such as an interface IP required for outer IP encapsulation of an overlay tunnel, and SA information required for IPsec data encryption.

Step 702: The first node receives TNP information sent by the controller RR, and one-to-one pairs the TNP information sent by the controller RR with the local TNP information, to obtain an SD-WAN TVC tunnel connection table.

In this embodiment, after the RR receives TNP information sent by each node, the RR further needs to reflect the received TNP information to another node, that is, the RR needs to reflect, to the first node, the received TNP information sent by each node.

The first node matches the TNP information received from the RR with the TNP information stored in the first node, to obtain an SD-WAN TVC tunnel table of the first node, namely, an overlay topology table.

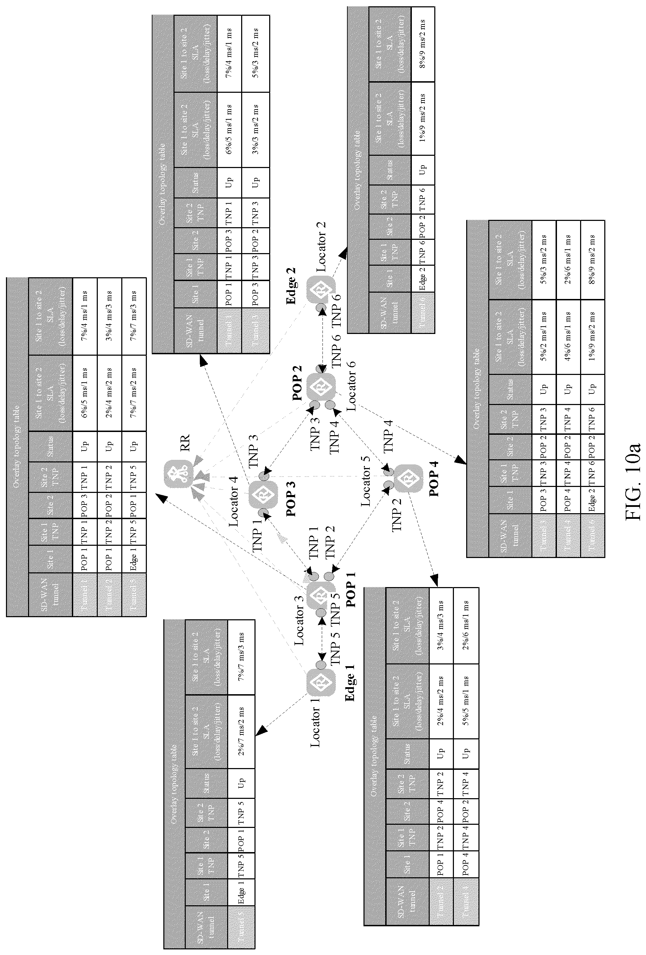

In a possible example, the first node further needs to automatically deploy an SLA detection protocol on a TVC associated with the first node. The SLA detection protocol is used to detect a connection status (for example, an up/down state) and an SLA quality status (for example, a packet loss, a delay, and a jitter) of the TVC associated with the first node. The first node needs to store, in an overlay topology stored in the first node, the connection status and the SLA quality status of the TVC associated with the first node, to obtain an SD-WAN overlay SR network shown in FIG. 10a. In the SD-WAN overlay SR network shown in FIG. 10a, each node stores overlay topology information associated with the node. The overlay topology information includes at least an identifier of an SD-WAN tunnel (which may also be referred to as a TVC tunnel), an end of the SD-WAN tunnel, a transport network port of the SD-WAN tunnel, a connection status of the SD-WAN tunnel, and SLA quality of the SD-WAN tunnel.

In a possible example, an edge node edge 1 in FIG. 10a is used as the first node to describe the overlay topology generated by the first node. As shown in FIG. 10a, the overlay topology table of the edge 1 includes: A tunnel 5 is associated with the edge 1, a first end site 1 of the tunnel 5 is the edge 1, a second end site 2 of the tunnel 5 is a POP 1, a TNP of the tunnel 5 at the site 1 is a TNP 5, a TNP of the tunnel 5 at the site 2 is the TNP 5, a status of the tunnel 5 is up, a packet loss ratio loss from the site 1 to the site 2 is 2%, a delay from the site 1 to the site 2 is 7 ms, a jitter from the site 1 to the site 2 is 2 ms, a packet loss ratio loss from the site 2 to the site 1 is 7%, a delay from the site 2 to the site 1 is 7 ms, and a jitter from the site 2 to the site 1 is 3 ms.

It may be understood that, in embodiments of this application, during SLA quality detection of the SD-WAN tunnel, SLA quality of the SD-WAN tunnel is different due to different data transmission directions in the same SD-WAN tunnel. In other words, the overlay topology of the edge 1 needs to store both the SLA quality from the site 1 to the site 2 and the SLA quality from the site 2 to the site 1.

Step 703: The first node obtains overlay topology information sent by another node, to generate an SD-WAN SR overlay topology.

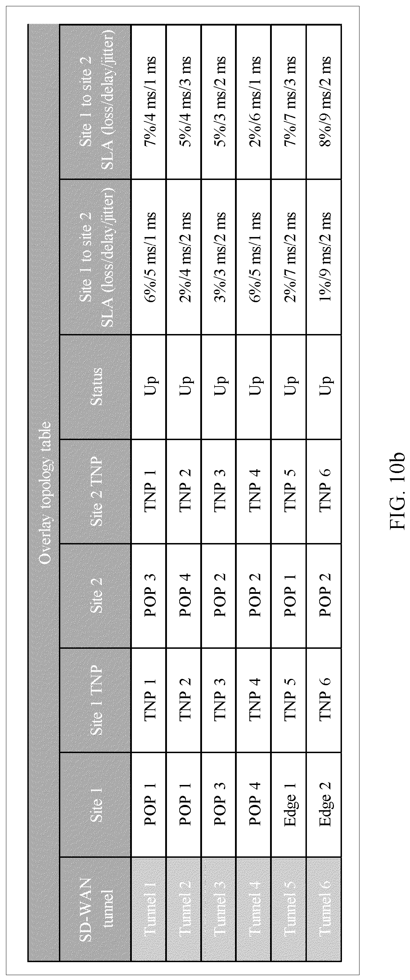

In this embodiment, the first node further needs to obtain the overlay topology information sent by the another node, to generate overlay topology information of the entire SD-WAN overlay SR network on the first node. As shown in FIG. 10a, when the first node is the edge 1, the edge 1 receives overlay topology information advertised by the POP 1, the POP 2, the POP 3, the POP 4, and the edge 2, and the edge 1 generates the topology information of the SD-WAN overlay SR network based on the received overlay topology information sent by other nodes (the POP 1, the POP 2, the POP 3, the POP 4, and the edge 2). The overlay topology information, stored in each node, of the SD-WAN overlay SR network is shown in FIG. 10b.

In a possible example, when obtaining the overlay topology information sent by the another node, the first node may obtain the overlay topology information of the another node via an extended BGP packet (for example, a BGP-SPF packet or a BGP-LS packet).

In a possible example, the first node receives at least one BGP packet sent by the controller, where the BGP packet carries overlay topology information of a node. The overlay topology information includes at least the following: an identifier of the SD-WAN tunnel, an end of the SD-WAN tunnel, and a transport network port of the SD-WAN tunnel.

In a possible example, the overlay topology information may further include a connection status of the SD-WAN tunnel and SLA quality of the SD-WAN tunnel.

In another possible example, the first node may directly receive a BGP packet sent by another node in the SD-WAN overlay SR network, where the BGP packet carries overlay topology information of the node that sends the BGP packet. The overlay topology information includes at least the following: an identifier of the SD-WAN tunnel, an end of the SD-WAN tunnel, and a transport network port of the SD-WAN tunnel.

In a possible example, the overlay topology information may further include a connection status of the SD-WAN tunnel and SLA quality of the SD-WAN tunnel.

It may be understood that the first node may obtain, via the received BGP packet, the overlay topology information stored in the another node, or obtain, via another protocol packet, the overlay topology information stored in the another node. In embodiments of this application, a manner in which the first node obtains the overlay topology information stored in the another node is not limited.

Step 704: The first node obtains an SD-WAN overlay locator route advertised by a second node, where the SD-WAN overlay locator route includes a locator configured by the second node at an overlay layer.

In this embodiment, the locator at the overlay layer is a locator indicating a node that is at the overlay layer and that is in the SD-WAN overlay SR network, each node at the overlay layer has at least one globally unique locator value used as a shared prefix of a local SID, and another node accesses a SID of the current node via a locator route. When generating the overlay topology information of the entire SD-WAN overlay SR network, the first node further needs to obtain the SD-WAN overlay locator route advertised by the second node. The locator is used as a locator identifying an SR node in the overlay network. Each node has at least one globally unique locator value used as a shared prefix of a local SID. Another node accesses a SID of the current node via a locator route.

In a possible example, the locator configured by the second node at the overlay layer may be a space segment identified by a number or a segment route identified by an IPv6 address.

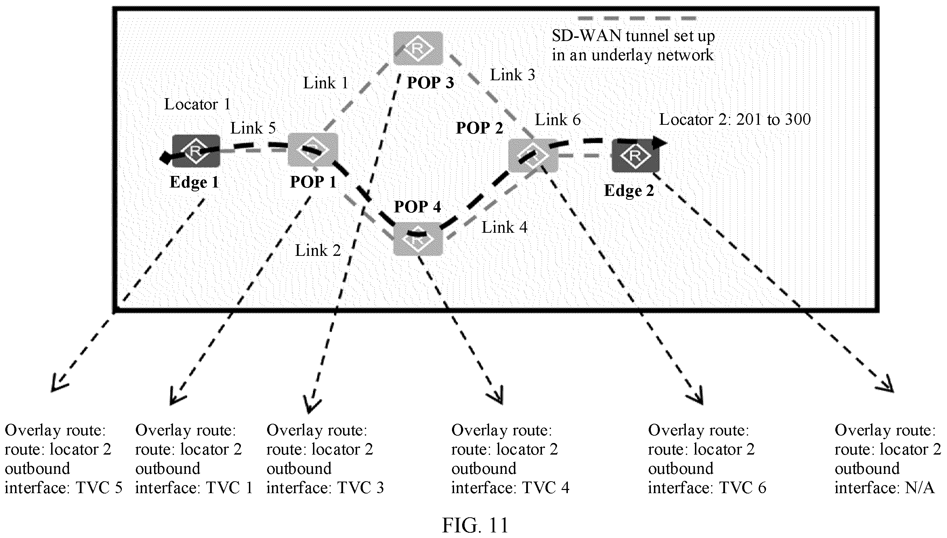

Because this embodiment is for an SR-BE mode, in the SD-WAN overlay SR network, usually, only an edge node applies for allocation of the locator route. In a possible example, refer to FIG. 11. The first node may be the edge 1, and the second node may be the edge 2. The first node obtains the SD-WAN overlay locator route locator 2 sent by the second node, where a space segment identified by the locator 2 is from 201 to 300.

In a possible example, the first node receives the BGP packet sent by the controller, where the BGP packet carries a locator route of the edge 2.

In another possible example, the first node may directly receive a BGP packet sent by the edge 2, where the BGP packet carries the SD-WAN overlay locator route of the edge 2.

It may be understood that the first node may obtain, via the received BGP packet, the SD-WAN overlay locator route advertised by the edge 2, or obtain, via another protocol packet, the SD-WAN overlay locator route advertised by the edge 2. In embodiments of this application, a manner in which the first node obtains the SD-WAN overlay locator route of the edge 2 is not limited.

It may be understood that there is no sequence of step 703 and step 704. In a specific implementation process, an example in which the first node obtains the overlay topology and the SD-WAN overlay locator route of the edge 2 is used. The first node may first obtain the overlay topology information of the edge 2, and then obtain the SD-WAN overlay locator route advertised by the edge 2. Alternatively, the first node may first obtain the SD-WAN overlay locator route advertised by the edge 2, and then obtain the overlay topology information of the edge 2. Further, the first node may alternatively obtain the overlay topology information and the SD-WAN overlay locator route of the edge 2 at the same time. In other words, the protocol packet (for example, the BGP packet) received by the first node carries both the overlay topology and the SD-WAN overlay locator route of the edge 2.

Step 705: The first node obtains, based on the SD-WAN overlay locator route and the topology information, an SD-WAN overlay SR BE path arriving at the second node.

In this embodiment, after receiving the SD-WAN overlay locator route advertised by the second node, the first node may determine, based on the overlay topology information, stored in the first node, of the SD-WAN overlay SR network, the SD-WAN overlay SR path from the first node to the second node.

For example, FIG. 11 is used as an example for description. The first node is an edge 1 in FIG. 11, and the second node is an edge 2 in FIG. 11. After receiving the locator route advertised by the edge 2, the edge 1 may determine, according to an SPF algorithm and the overlay topology information, stored in the edge 1, of the SD-WAN overlay SR network, that an optimal path from the edge 1 to the edge 2 is edge 1-POP 1-POP 4-POP 2-edge 2. An outbound interface of the path on the edge 1 is a TVC 5, that is, an overlay route is generated on the edge 1. A route of the overlay route is a locator 2 and the outbound interface is the TVC 5. Similarly, after receiving the SD-WAN locator routes advertised by the edge 2, the POP 1, the POP 3, the POP 4, and the POP 2 also generate corresponding overlay routes. For example, a route of the overlay route generated by the POP 1 is the locator 2 and an outbound interface is a TVC 1; a route of the overlay route generated by the POP 3 is the locator 2 and an outbound interface is a TVC 3; a route of the overlay route generated by the POP 4 is the locator 2 and an outbound interface is a TVC 4; and a route of the overlay route generated by the POP 2 is the locator 2 and an outbound interface is a TVC 6.

Step 706: The first node receives a VPN route sent by the second node, and interleaves the VPN route with a VPN instance routing table corresponding to the first node, where the VPN route includes a VPN SID, and the VPN SID is a SID allocated by the second node in a locator of the second node.

In this embodiment, the first node and the second node may be edge nodes in the SD-WAN overlay SR network. Different interfaces of the edge node are bound to different VPN instances. Usually, a VPN instance may also be referred to as a VPN routing and forwarding table (VPN Routing and Forwarding table, VRF table). The VRF table includes an IP routing table, a label forwarding table, an interface that uses the label forwarding table, and management information (including a route filtering policy, a member interface list, and the like).

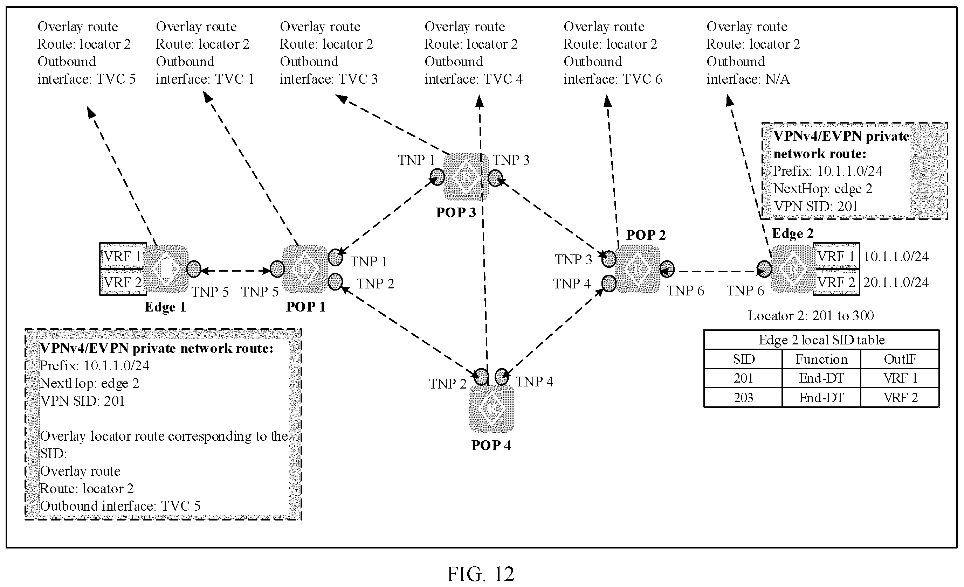

In a possible example, as shown in FIG. 12, the first node may be the edge 1, and the second node may be the edge 2. Two interfaces on the edge 1 and the edge 2 are bound to VRF 1 and VRF 2 respectively. The edge 2 receives a prefix: 10.1.1.0/24 of a private network route through the interface bound to the VRF 1, and the edge 2 receives a prefix: 20.1.1.0/24 of the private network route through the interface bound to the VRF 2. A locator route locator 2 is configured on the edge 2, and a segment address of the locator 2 is from 201 to 300. The edge 2 may separately allocate, in the locator 2 of the edge 2, VPN SIDs to a VPN route corresponding to the VRF 1 and a VPN route corresponding to the VRF 2, and obtain a local SID table of the edge 2, where the local SID table of the edge 2 is shown in FIG. 12.

After allocating the VPN SIDs to the private network routes of the edge 2, the edge 2 may further convert the private network route (for example, an IPv4 route) into a BGP VPNv4 route and advertise the BGP VPNv4 route to the edge 1 via a BGP neighbor relationship. Refer to FIG. 12. The VPNv4/EVPN private network route advertised by the edge 2 to the edge 1 carries a route prefix: 20.1.1.0/24, a next hop NextHop of the route: the edge 2, and a VPN SID: 201.

After receiving the BGP VPNv4 route advertised by the edge 2, the edge 1 interleaves the route with the corresponding VPN instance routing table.

After receiving the BGP VPNv4 route, the edge 1 further needs to convert the VPNv4 route into a common IPv4 route, and advertise the common IPv4 route to a node on a user side.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially performed, or may be completely performed based on an actual situation. This is not limited herein. All or some of any features in any embodiment of this application may be freely and randomly combined with each other in the case of no conflict. A combined technical solution also falls within the scope of this application.

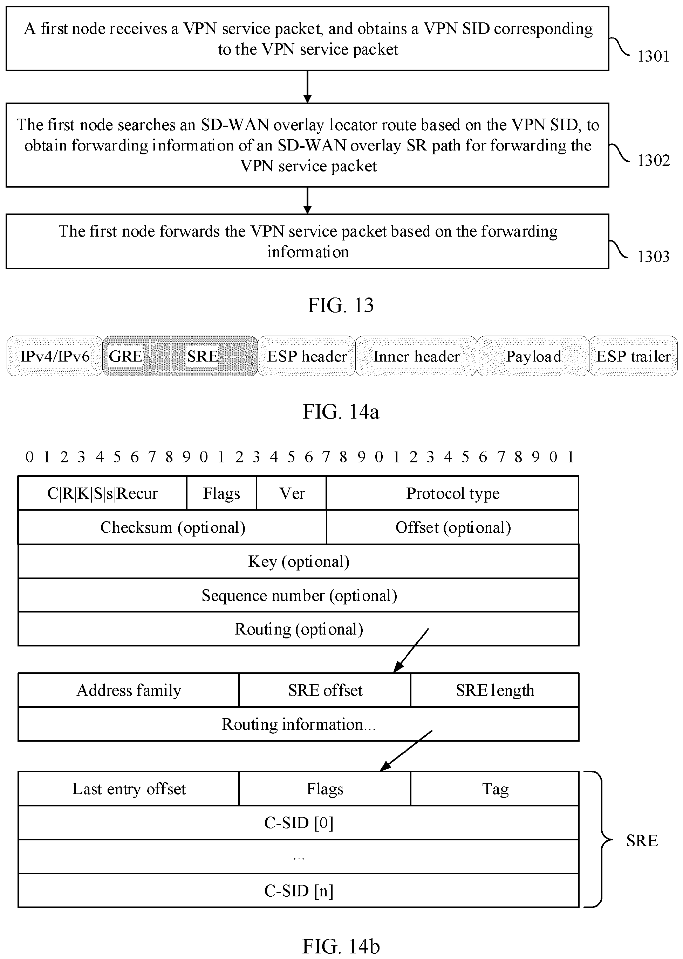

Based on the communication method for an SD-WAN shown in FIG. 7, an embodiment of this application further provides a packet processing method based on the communication method. For example, FIG. 13 is a flowchart of a packet processing method. The method may be applied to the SD-WAN shown in FIG. 8. Refer to FIG. 13. The method includes step 1301 to step 1303.

Step 1301: A first node receives a VPN service packet, and obtains a VPN SID corresponding to the VPN service packet.

In this embodiment, when the first node is an edge node, the first node may receive, through an interface bound to a VPN instance, the VPN service packet sent by a user side. After receiving the VPN service packet, the first node may search a corresponding VPN instance routing and forwarding table, and match a route prefix of the VPN service packet, to obtain the VPN SID corresponding to the VPN service packet. As shown in FIG. 12, if the route prefix of the VPN service packet received by an edge 1 is 10.1.1.0/24, it may be determined that the VPN SID corresponding to the VPN service packet is 201.

Step 1302: The first node searches an SD-WAN overlay locator route based on the VPN SID, to obtain forwarding information of an SD-WAN overlay SR path for forwarding the VPN service packet.

In this embodiment, as shown in FIG. 12, the first node searches, based on the VPN SID corresponding to the VPN service packet, the SD-WAN overlay locator route stored in the first node, to hit a route locator 2 for the VPN SID (201). An outbound interface of the locator 2 is a TVC5. The VPN service packet received by the first node is forwarded through a TVC5 tunnel.

Step 1303: The first node forwards the VPN service packet based on the forwarding information.

In this embodiment, before forwarding the VPN service packet, the first node further needs to encapsulate the VPN service packet. Specifically, the first node may perform generic routing encapsulation (generic routing encapsulation, GRE) on the VPN service packet. The VPN SID corresponding to the VPN service packet is encapsulated into a GRE header by extending the GRE packet header. It may be understood that the first node may encapsulate the VPN service packet through GRE, or the first node may encapsulate the VPN service packet in another encapsulation manner, for example, a virtual extensible local area network (virtual extensible LAN, VXLAN).

A locator configured by the node may be a space segment identified by a number or a segment route identified by an IPv6 address. Therefore, the VPN SID allocated in locator space may also be a specific numeric ID or an IPv6 address. GRE for encapsulating the VPN SID varies with a format of the VPN SID.

When the VPN SID is a numeric ID, the first node may encapsulate the packet in an independent ID over GRE manner. For example, FIG. 14a is a diagram of GRE-based packet encapsulation. As shown in FIG. 14a, an encapsulated service packet includes an IP packet header, a GRE header, and a payload. The IP packet header is used for transmission in an SD-WAN tunnel, and the IP packet header may be an IPv4 packet header or an IPv6 packet header. The GRE header includes a source route entry, and the source route entry is used to carry the VPN SID. The payload carries data information that needs to be transmitted. When the data information carried in the payload is encapsulated into the packet, the data information carried in the payload may be encapsulated via an encapsulating security payload (encapsulating security payload, ESP) protocol, that is, an ESP header, an inner header, and an ESP trailer are encapsulated for the payload. When the packet is forwarded, the packet is first forwarded based on the outer IP packet header through the SD-WAN tunnel. When the packet is forwarded to an SD-WAN node, the node may determine a forwarding path at an SD-WAN overlay layer based on the VPN SID carried in the GRE header, and perform SD-WAN tunnel encapsulation on the packet again based on the forwarding path, that is, a new IP packet header is encapsulated for the packet, to forward the packet based on the encapsulated IP packet header through the SD-WAN tunnel.

For example, FIG. 14b is a diagram of a structure of a GRE packet header. As shown in FIG. 14b, the GRE packet header includes: flags: C, R, K, S, and s: a protocol type field, an offset field, an offset field, a key field, a sequence number field, and a routing field.

C is a checksum present bit, where if C is set to 1, it indicates that a checksum field is present and the GRE packet header includes valid information.

R is a routing present bit, where if R is set to 1, it indicates that the offset field and the routing field are present and the GRE packet header includes valid information.

K is a key present bit, where if K is set to 1, it indicates that the key field is present and the GRE packet header includes valid information.

S is a sequence number present bit, where if S is set to 1, it indicates that the sequence number field is present and the GRE packet header includes valid information.

s is a strict source route bit, where if s is set to 1, it indicates that all route information is strict source routes.

The protocol type, namely, a "protocol type" field, includes a protocol type of a payload packet.

The offset field indicates an offset, from the "routing" field to a first octet, of an active source route entry that needs to be detected.

The checksum, namely, the checksum field, includes the GRE packet header and the payload.

A length of the key field is 4 octets. The key field is encapsulated into the packet by an encapsulator, and may be used by a receiver to authenticate a source of the packet.

The sequence number, namely, the sequence number field, with a length of 4 octets, is encapsulated into the packet by the encapsulator, and is used by the receiver to sort received packets.

A length of the routing field is variable, and the routing field includes a series of SREs (Source Route Entries).

In this embodiment, the VPN SID corresponding to the VPN service packet may be carried by adding the source route entries (source route entries, SREs) to the "routing" field of the GRE packet header. After receiving the VPN service packet into which the GRE header is encapsulated, each node in the SD-WAN overlay SR network forwards the VPN service packet based on the VPN SID carried in the GRE header of the VPN service packet.

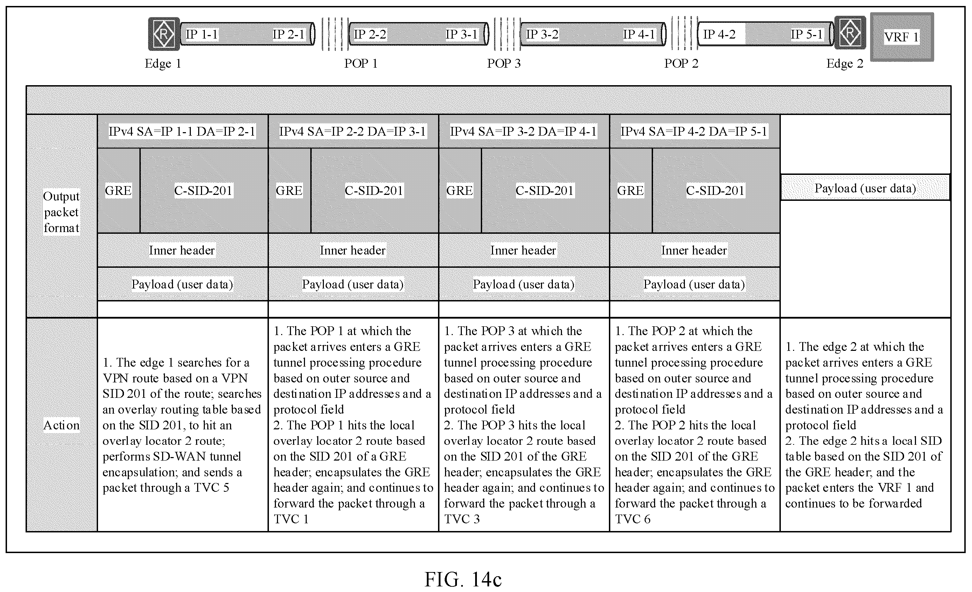

The following describes, by using the SD-WAN shown in FIG. 11 as an example, a process of forwarding, in the SD-WAN, the VPN service packet received by the edge 1. For example, FIG. 14c is a diagram of packet forwarding in an SR-BE mode in an SD-WAN overlay SR network.

After receiving, through the interface bound to the VPN instance, the VPN service packet sent by the user side, the edge 1 searches the corresponding VPN instance routing and forwarding table, to obtain the VPN SID 201 corresponding to the VPN service packet. Then, the edge searches the SD-WAN overlay locator route on the edge 1 based on the SID 201, to hit the overlay locator 2 route, that is, it may be determined that the VPN service packet needs to be forwarded through the TVC 5. After determining the forwarding tunnel of the VPN service packet, the edge 1 needs to encapsulate the VPN service packet again, that is, the edge 1 needs to encapsulate a GRE header for the VPN service packet, and encapsulate the VPN SID corresponding to the VPN service packet into the GRE header. Then, the edge 1 performs SD-WAN tunnel encapsulation again on the packet into which the GRE header is encapsulated, that is, encapsulating an IPv4 packet header into a header of the VPN service packet into which the GRE packet header is encapsulated. The IPv4 packet header includes an IPv4 source address (source address, SA): IP 1-1 and a destination address (destination address, DA): IP 2-1.

After receiving the VPN service packet through the TVC 5, the POP 1 enters a GRE tunnel processing procedure based on the source and destination IP addresses and the protocol field of the VPN service packet. The POP 1 obtains the SID 201 carried in the GRE header, and searches the SD-WAN overlay locator route on the POP 1 based on the SID 201, to hit the locator 2, that is, it may be determined that the VPN service packet needs to be forwarded through the TVC 1. The POP 1 performs SD-WAN tunnel encapsulation on the received VPN service packet again, that is, encapsulating an IPv4 packet header into the header of the VPN service packet into which the GRE packet header is encapsulated. The IPv4 packet header includes an IPv4 SA: IP 2-2 and a DA: IP 3-1.

After receiving the VPN service packet through the TVC 1, the POP 3 enters a GRE tunnel processing procedure based on the source and destination IP addresses and the protocol field of the VPN service packet. The POP 3 obtains the SID 201 carried in the GRE header, and searches the SD-WAN overlay locator route on the POP 3 based on the SID 201, to hit the locator 2, that is, it may be determined that the VPN service packet needs to be forwarded through the TVC 3. The POP 3 performs SD-WAN tunnel encapsulation on the received VPN service packet again, that is, encapsulating an IPv4 packet header into the header of the VPN service packet into which the GRE packet header is encapsulated. The IPv4 packet header includes an IPv4 SA: IP 3-2 and a DA: IP 4-1.

After receiving the VPN service packet through the TVC 3, the POP 2 enters a GRE tunnel processing procedure based on the source and destination IP addresses and the protocol field of the VPN service packet. The POP 2 obtains the SID 201 carried in the GRE header, and searches the SD-WAN overlay locator route on the POP 2 based on the SID 201, to hit the locator 2, that is, it may be determined that the VPN service packet needs to be forwarded through the TVC 6. The POP 2 performs SD-WAN tunnel encapsulation on the received VPN service packet again, that is, encapsulating an IPv4 packet header into the header of the VPN service packet into which the GRE packet header is encapsulated. The IPv4 packet header includes an IPv4 SA: IP 4-2 and a DA: IP 5-1.

After receiving the VPN service packet through the TVC 6, the edge 2 enters a GRE tunnel processing procedure based on the source and destination IP addresses and the protocol field of the VPN service packet. The edge 2 obtains the SID 201 carried in the GRE header, and searches the SD-WAN overlay locator route on the POP 2 based on the SID 201, to hit the locator 2. The locator 2 on the edge 2 does not have an outbound interface (the outbound interface is N/A). The edge 2 may search the local SID table of the edge 2 based on the SID 201, to hit the VRF 1. In this case, the edge may continue to forward the service packet via the VRF 1. Because a local behavior End-DT (decapsulating the packet and searching a specified routing table and forwarding) corresponding to the SID 201 is specified in the local SID table, the packet forwarded from the edge 2 through a port bound to the VRF 1 does not have the GRE header.

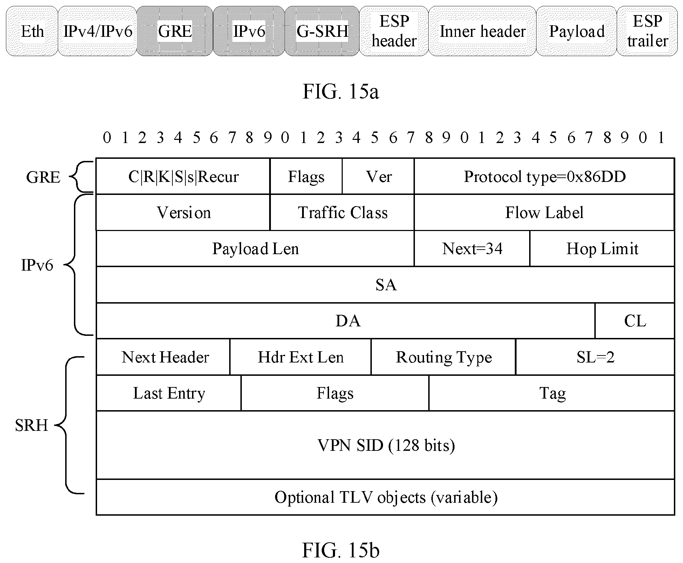

When the VPN SID is an IPv6 address, the first node may encapsulate the packet in an SRv6 over GRE manner, that is, encapsulating an IPv6 packet header into the GRE header. For example, FIG. 15a is a diagram of GRE-based packet encapsulation. As shown in FIG. 15a, when the VPN service packet is encapsulated, a GRE header may be encapsulated for the VPN service packet, to obtain a GRE packet. Then, SD-WAN tunnel encapsulation is performed on the GRE packet, that is, encapsulating an IP packet header for the VPN service packet into which the GRE header is encapsulated. The IP packet header may alternatively be an IPv4 packet header or an IPv6 packet header.

For example, FIG. 15b is a diagram of a structure of a GRE packet header. As shown in FIG. 15b, an IPv6 packet header and an SRH are added to the GRE packet header. The IPv6 packet header includes a source address SA and a destination address DA. A VPN SID field is added to the SRH to carry the VPN SID.

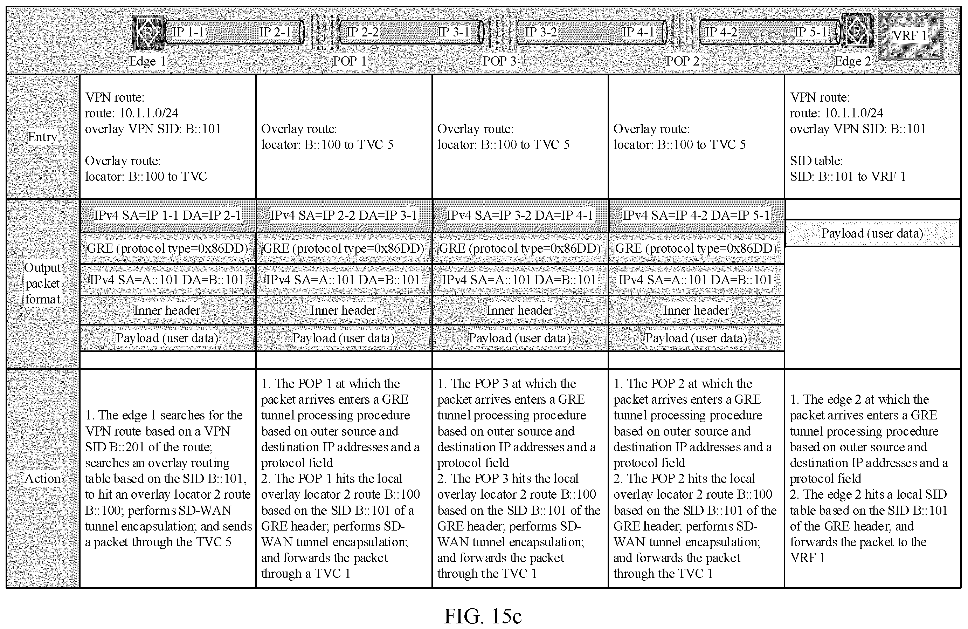

The following describes, by using the SD-WAN overlay SR network shown in FIG. 11 as an example, a process of forwarding, in the SD-WAN overlay SR network, the VPN service packet received by the edge 1. For example, FIG. 15c is a diagram of packet forwarding in an SR-BE mode in an SD-WAN overlay SR network.

After receiving, through the interface bound to the VPN instance, the VPN service packet sent by the user side, the edge 1 searches the corresponding VPN instance routing and forwarding table, to obtain the VPN SID B::101 corresponding to the VPN service packet. Then, the edge searches the SD-WAN overlay locator route on the edge 1 based on the SID B::101, to hit the overlay locator 2 route B::100, that is, it may be determined that the VPN service packet needs to be forwarded through the TVC 5. After determining the forwarding tunnel of the VPN service packet, the edge needs to encapsulate the VPN service packet again, that is, the edge needs to encapsulate a GRE header for the VPN service packet, encapsulate the VPN SID corresponding to the VPN service packet into the VPN SID field of the SRH of the GRE header, and modify the DA of the IPv6 packet header of the GRE header to an IPv6 address corresponding to the VPN SID. Then, the edge performs SD-WAN tunnel encapsulation again on the packet into which the GRE header is encapsulated, that is, encapsulating an IPv4 packet header into a header of the VPN service packet into which the GRE packet header is encapsulated. The IPv4 packet header includes an IPv4 SA: IP 1-1 and a DA: IP 2-1. For a packet format of the VPN service packet sent from the edge 1, refer to an output packet format corresponding to the edge 1 in FIG. 15c.

After receiving the VPN service packet through the TVC 5, the POP 1 enters a GRE tunnel processing procedure based on the source and destination IP addresses and the protocol field of the VPN service packet. The POP 1 obtains the SID B::101 carried in the GRE header, and searches the SD-WAN overlay locator route on the POP 1 based on the SID B::101, to hit the overlay locator 2 route B::100, that is, it may be determined that the VPN service packet needs to be forwarded through the TVC 1. The POP 1 performs SD-WAN tunnel encapsulation on the received VPN service packet again, that is, encapsulating an IPv4 packet header into the header of the VPN service packet into which the GRE packet header is encapsulated. The IPv4 packet header includes an IPv4 SA: IP 2-2 and a DA: IP 3-1. For a packet format of the VPN service packet sent from the POP 1, refer to an output packet format corresponding to the POP 1 in FIG. 15c.

After receiving the VPN service packet through the TVC 1, the POP 3 enters a GRE tunnel processing procedure based on the source and destination IP addresses and the protocol field of the VPN service packet. The POP 3 obtains the SID B::101 carried in the GRE header, and searches the SD-WAN overlay locator route on the POP 3 based on the SID B::101, to hit the overlay locator 2 route B::100, that is, it may be determined that the VPN service packet needs to be forwarded through the TVC 3. The POP 3 performs SD-WAN tunnel encapsulation on the received VPN service packet again, that is, encapsulating an IPv4 packet header into the header of the VPN service packet into which the GRE packet header is encapsulated. The IPv4 packet header includes an IPv4 SA: IP 3-2 and a DA: IP 4-1. For a packet format of the VPN service packet sent from the POP 3, refer to an output packet format corresponding to the POP 3 in FIG. 15c.

After receiving the VPN service packet through the TVC 3, the POP 2 enters a GRE tunnel processing procedure based on the source and destination IP addresses and the protocol field of the VPN service packet. The POP 2 obtains the SID B::101 carried in the GRE header, and searches the SD-WAN overlay locator route on the POP 2 based on the SID B::101, to hit the overlay locator 2 route B::100, that is, it may be determined that the VPN service packet needs to be forwarded through the TVC 6. The POP 2 performs SD-WAN tunnel encapsulation on the received VPN service packet again, that is, encapsulating an IPv4 packet header into the header of the VPN service packet into which the GRE packet header is encapsulated. The IPv4 packet header includes an IPv4 SA: IP 2-2 and a DA: IP 3-1. For a packet format of the VPN service packet sent from the POP 2, refer to an output packet format corresponding to the POP 2 in FIG. 15c.

After receiving the VPN service packet through the TVC 6, the edge 2 enters a GRE tunnel processing procedure based on the source and destination IP addresses and the protocol field of the VPN service packet. The edge 2 obtains the SID B::101 carried in the GRE header, and searches the SD-WAN overlay locator route on the edge 2 based on the SID B::101, to hit the overlay locator 2 route B::100. The locator 2 on the edge 2 does not have an outbound interface (the outbound interface is N/A). The edge 2 may search the local SID table of the edge 2 based on the SID B::101, to hit the VRF 1. In this case, the edge 2 may continue to forward the service packet via the VRF 1. Because a local behavior End-DT (decapsulating the packet and searching a specified routing table and forwarding) corresponding to the SID 201 is specified in the local SID table, the packet forwarded from the edge 2 through a port bound to the VRF 1 does not have the GRE header.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially performed, or may be completely performed based on an actual situation. This is not limited herein. All or some of any features in any embodiment of this application may be freely and randomly combined with each other in the case of no conflict. A combined technical solution also falls within the scope of this application.

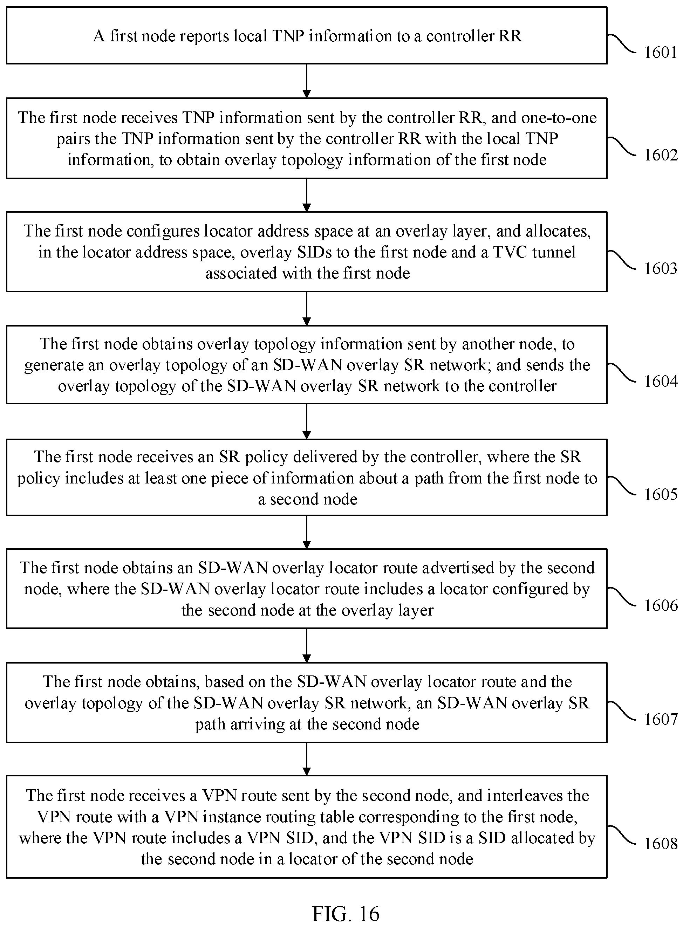

For example, FIG. 16 is a schematic flowchart of a communication method for an SD-WAN. The method may be applied to the SD-WAN overlay SR network shown in FIG. 8. As shown in FIG. 8, the network includes edge nodes: an edge 1 and an edge 2, transit forwarding nodes: a POP 1 to a POP 4, an SD-WAN controller, and a BGP-RR. Any two nodes communicate with each other over a transport network (transport network, TN), and any node in the network may collect overlay topologies of the entire network via a BGP-SPF protocol. As shown in FIG. 16, the method includes step 1601 to step 1608, and the method is mainly applicable to an SR-TE mode.

Step 1601: A first node reports local TNP information to a controller RR.

Step 1602: The first node receives TNP information sent by the controller RR, and one-to-one pairs the TNP information sent by the controller RR with the local TNP information, to obtain overlay topology information of the first node.

For an implementation process of step 1601 and step 1602 in this embodiment, refer to step 701 and step 702. Details are not described herein again.

Step 1603: The first node configures locator address space at an overlay layer, and allocates, in the locator address space, overlay SIDs to the first node and a TVC tunnel associated with the first node.

In this embodiment, the first node may be any node in an SD-WAN overlay SR network. The first node needs to configure the locator address space of the first node at the overlay layer. The locator address space configured by the first node may be a space segment identified by a number or a segment route identified by an IPv6 address.

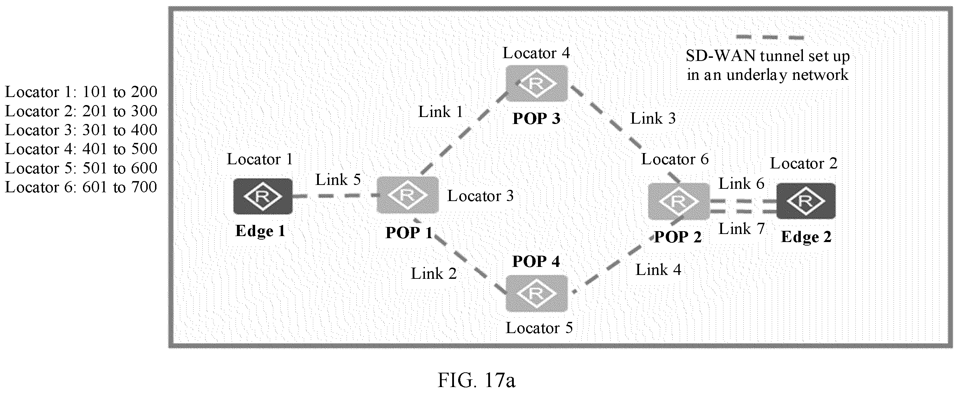

For example, FIG. 17a shows locator address space configured by each node, in an SD-WAN overlay SR network, at an overlay layer. As shown in FIG. 17a, the edge 1 configures a locator route: locator 1: 101 to 200 at the overlay layer, the edge 2 configures a locator route: locator 2: 201 to 300 at the overlay layer, the POP 1 configures a locator route: locator 3: 301 to 400 at the overlay layer, the POP 3 configures a locator route: locator 4: 401 to 500 at the overlay layer, the POP 4 configures a locator route: locator 5: 501 to 600 at the overlay layer, and the POP 2 configures a locator route: locator 6: 601 to 700 at the overlay layer.

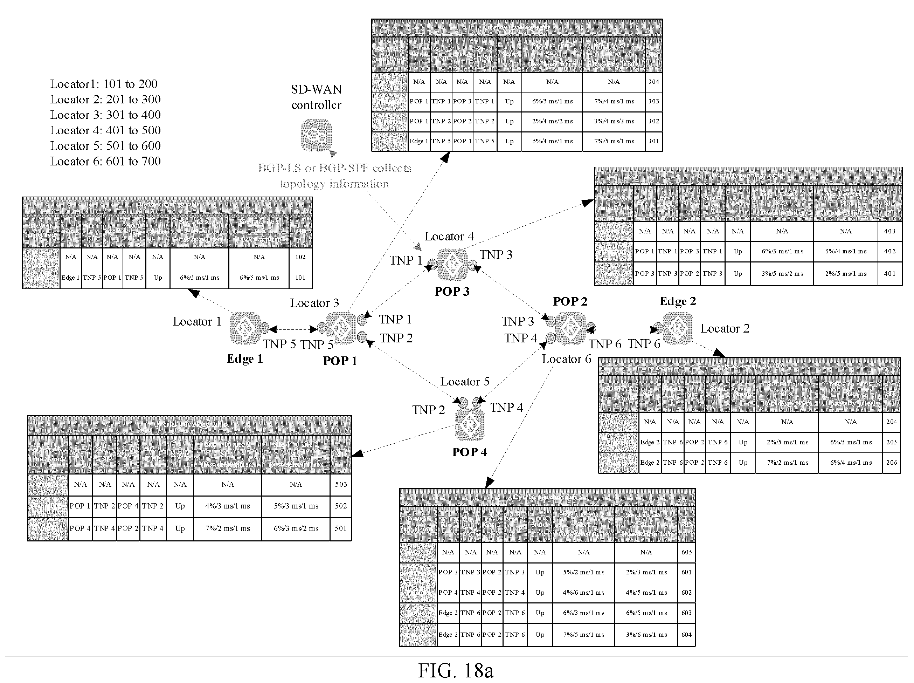

After configuring the locator address space of the first node at the overlay layer, the first node further needs to allocate, in the locator address space, the SIDs to the first node and an SD-WAN tunnel (namely, the TVC tunnel) associated with the first node. The SID may be in a form of an SRv6 SID address or may be a SID address in another form. For example, the first node is the edge 1. Refer to FIG. 18a. A SID allocated by the edge 1 to the node, namely, the edge 1, is 102, an overlay tunnel associated with the edge 1 is a tunnel 5, and a SID allocated by the edge 1 to the tunnel 5 is 101. The edge 1 stores the SIDs of the edge 1 and the tunnel 5 in an overlay topology table of the edge 1. It may be understood that overlay topology information of each node in the SD-WAN overlay SR network further includes a connection status and SLA quality of an overlay tunnel.

After allocating the SID, namely, a node SID, to the first node, and allocating the SID, namely, a link SID, to the SD-WAN tunnel associated with the first node, the first node needs to generate a SID forwarding table on the current node. In the SID forwarding table, a customized function is specified for each SID. An action of the link SID is to send a packet to a specified SD-WAN tunnel, and an action of the node SID is to process a next SID.

Step 1604: The first node obtains overlay topology information sent by another node, to generate an overlay topology of the SD-WAN overlay SR network; and sends the overlay topology of the SD-WAN overlay SR network to the controller.

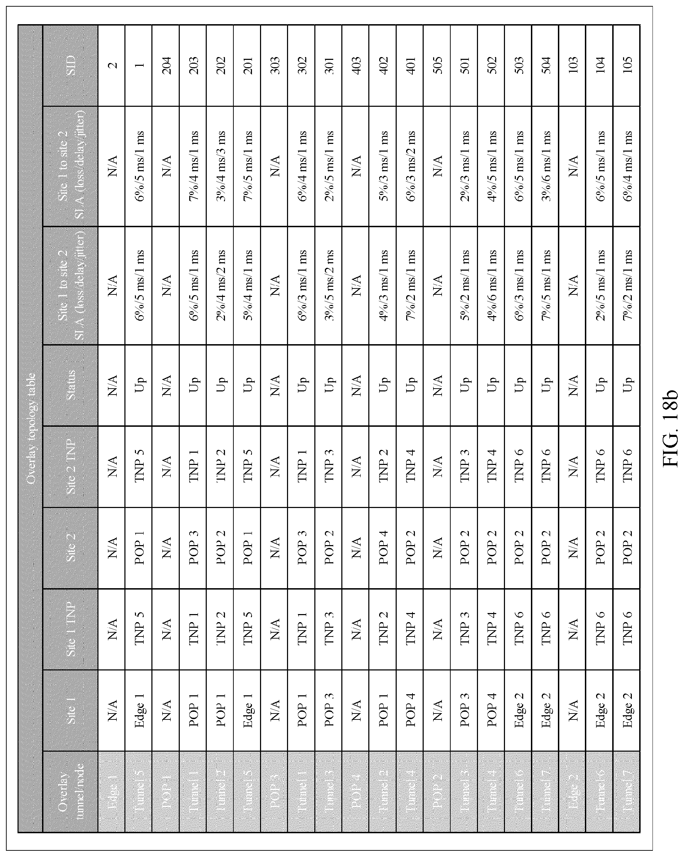

In this embodiment, the first node obtains the overlay topology information advertised by the another node, and generates the overlay topology of the SD-WAN overlay SR network based on the obtained overlay topology information. The overlay topology includes a SID of a node in the SD-WAN overlay SR network and a SID of an overlay tunnel. In a possible example, the overlay topology information, stored in each node in the SD-WAN overlay SR network, of the SD-WAN overlay SR network is shown in FIG. 18b.

After generating the overlay topology information of the SD-WAN overlay SR network, the first node further needs to send the overlay topology of the SD-WAN overlay SR network to the controller, so that the controller can receive the overlay topology of the SD-WAN overlay SR network, create an end-to-end overlay TE tunnel in the SD-WAN overlay SR network.

In a possible example, the first node may send, to the controller via a BGP-SPF protocol or a BGP-LS protocol, the overlay topology that is of the SD-WAN overlay SR network and that is stored in the first node.

It may be understood that the first node may send, via a BGP packet, the overlay topology information stored in the first node to the controller, or send, via another protocol packet, the overlay topology information stored in the first node to the controller. In embodiments of this application, a manner in which the first node sends the stored overlay topology information to the controller is not limited.

Step 1605: The first node receives an SR policy delivered by the controller, where the SR policy includes at least one piece of information about a path from the first node to a second node.

In this embodiment, the controller may create the end-to-end overlay TE tunnel in the network based on the received overlay topology of the SD-WAN overlay SR network. When the first node is an edge node, the first node further needs to receive the SR policy delivered by the controller, or generate the SR policy.

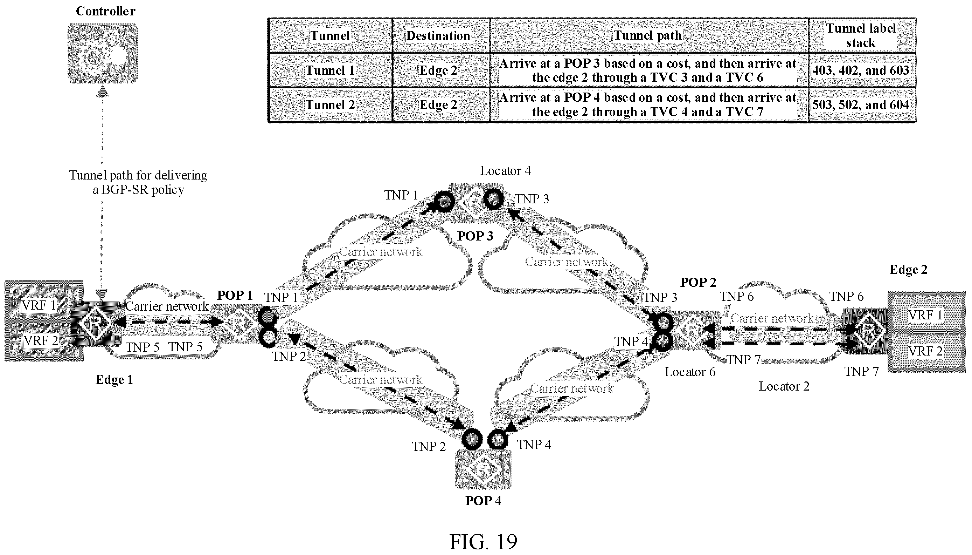

In a possible example, as shown in FIG. 19, the controller may generate an SR policy from the edge 1 to the edge 2. The SR policy includes two tunnels from the edge 1 to the edge 2, which are separately used by two VRF tables on the edge 1 and the edge 2. The SR policy may include a tunnel name, a destination node, a tunnel path, and a tunnel label stack.

In a possible example, the SR policy that is generated by the controller and that is from the edge 1 to the edge 2 is shown in Table 1.

**Table 1**

| Tunnel | Destination | Tunnel path | Tunnel label stack |
|---|---|---|---|
| Tunnel 1 | Edge 2 | Arrive at a POP 3 based on a cost, and then arrive at the edge 2 through a TVC 3 and a TVC 6 | 403, 402, and 603 |
| Tunnel 2 | Edge 2 | Arrive at a POP 4 based on a cost, and then arrive at the edge 2 through a TVC 4 and a TVC 7 | 603, 502, and 604 |

After generating the SR policy from the edge 1 to the edge 2, the controller further needs to send the SR policy to a head node, namely, the edge 1. In a possible example, the SR policy sent by the controller to the edge 1 may include only the tunnel label stack.

In a possible example, the controller may deliver the SR policy to the head node, namely, the edge 1, via a BGP-SR-policy protocol packet. In some other examples, the controller may alternatively deliver the SR policy to the head node via another protocol packet. In this embodiment, a manner in which the controller delivers the SR policy to the head node is not limited.

In a possible example, the edge 1 may alternatively not receive, from the controller, the SR policy from the edge 1 to the edge 2. The edge 1 generates the SR policy from the edge 1 to the edge 2 based on the overlay topology, stored in the edge 1, of the SD-WAN overlay SR network.

After obtaining the SR policy from the edge 1 to the edge 2, the edge 1 further needs to store tunnel information carried in the SR policy to the VPN instance routing table corresponding to the edge 1. As shown in FIG. 19, the edge 1 may be set in the VRF 1. A route prefix is 10.1.1.0/24, a NextHop of a route is the edge 2, and the VPN service packet with the VPN SID 201 is set to pass through the tunnel 1. The edge 2 may be set in the VRF 2. A route prefix is 20.1.1.0/24, a NextHop of a route is the edge 2, and the VPN service packet with the VPN SID 203 is set to pass through the tunnel 2.

Step 1606: The first node obtains an SD-WAN overlay locator route advertised by a second node, where the SD-WAN overlay locator route includes a locator configured by the second node at the overlay layer.

In this embodiment, the first node and the second node may be any two nodes in the SD-WAN overlay SR network.

In a possible example, the first node receives the BGP packet sent by the controller, where the BGP packet carries a locator route of the second node.

In another possible example, the first node may directly receive a BGP packet sent by the second node, where the BGP packet carries an SD-WAN overlay locator route of the second node.

It may be understood that the first node may obtain, via the received BGP packet, the SD-WAN overlay locator route advertised by the second node, or obtain, via another protocol packet, the SD-WAN overlay locator route advertised by the second node. In embodiments of this application, a manner in which the first node obtains the SD-WAN overlay locator route of the second node is not limited.

It may be understood that there is no sequence of step 1604 and step 1606. In a specific implementation process, an example in which the edge obtains the overlay topology and the SD-WAN overlay locator route of the second node is used. The first node may first obtain the overlay topology information of the second node, and then obtain the SD-WAN overlay locator route advertised by the second node. Alternatively, the first node may first obtain the SD-WAN overlay locator route advertised by the second node, and then obtain the overlay topology information of the second node. Further, the first node may alternatively obtain the overlay topology information and the SD-WAN overlay locator route of the second node at the same time. In other words, the protocol packet (for example, the BGP packet) received by the first node carries both the overlay topology and the SD-WAN overlay locator route of the second node.

Step 1607: The first node obtains, based on the SD-WAN overlay locator route and the overlay topology of the SD-WAN overlay SR network, an SD-WAN overlay SR BE path arriving at the second node.

In this embodiment, after receiving the SD-WAN overlay locator route advertised by the second node, the first node needs to obtain, based on the overlay topology information, stored in the first node, of the SD-WAN overlay SR network, the SD-WAN overlay SR path arriving at the second node.

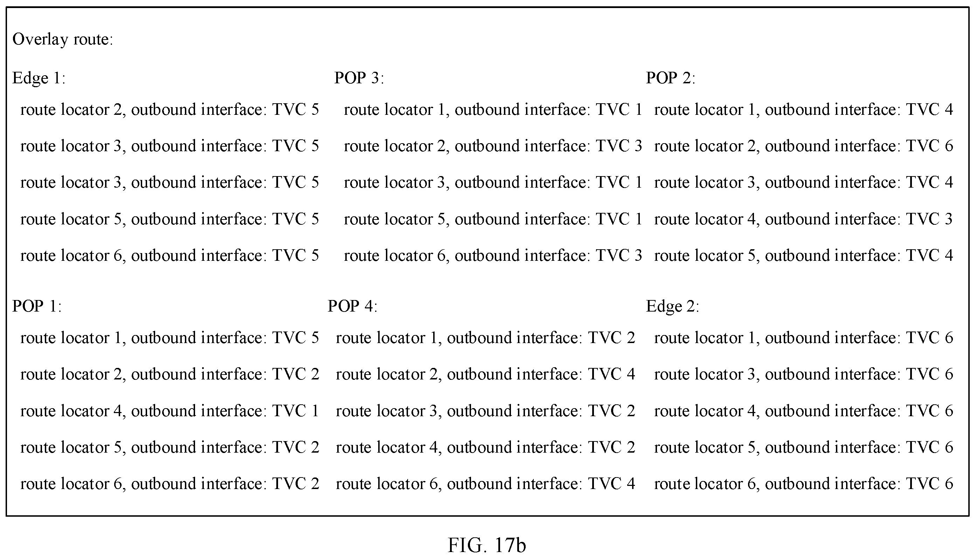

In a possible example, refer to FIG. 17a. An example in which the first node is the POP 3 is used for description. After receiving the locator route locator 1 sent by the edge 1, the POP 3 determines, according to an SPF algorithm and the overlay topology information, stored in the POP, of the SD-WAN overlay SR network, that an optimal path from the POP 3 to the edge 1 is POP 3-POP 1-edge 1. An outbound interface of the path on the POP 3 is a TVC 1, that is, an overlay route is generated on the POP 3. A route of the overlay route is the locator 1 and the outbound interface is the TVC 1. Similarly, after receiving SD-WAN locator routes advertised by the edge 2, the POP 1, the POP 4, and the POP 6, the POP 3 also generates the corresponding overlay route. For example, POP3 generates a route locator 2 and an outbound interface TVC 3, a route locator 3 and an outbound interface TVC 1, a route locator 5 and an outbound interface TVC 1, and a route locator 6 and an outbound interface TVC 3. Based on the SD-WAN overlay SR network shown in FIG. 17a, for overlay routes generated on nodes in the network, refer to FIG. 17b.

Step 1608: The first node receives a VPN route sent by the second node, and interleaves the VPN route with a VPN instance routing table corresponding to the first node, where the VPN route includes a VPN SID, and the VPN SID is a SID allocated by the second node in a locator of the second node.

In this embodiment, the first node and the second node may be edge nodes in the SD-WAN overlay SR network. Different interfaces of the edge node are bound to different VPN instances. Usually, a VPN instance may also be referred to as a VPN routing and forwarding VRF table. The VRF table includes an IP routing table, a label forwarding table, an interface that uses the label forwarding table, and management information (including a route filtering policy, a member interface list, and the like). After the first node receives the VPN route sent by the second node, the first node may iterate the VPN route including the VPN SID to an SR policy tunnel.

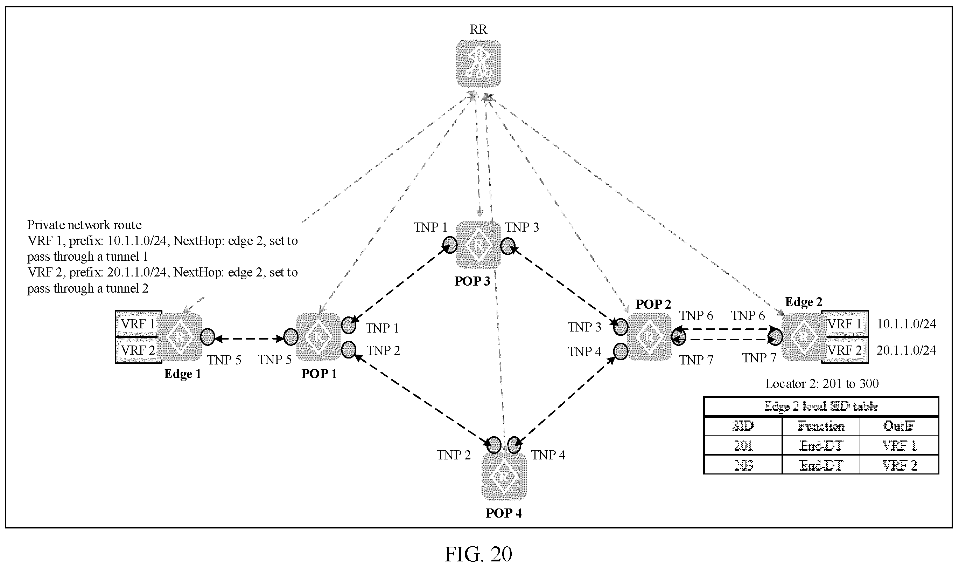

In a possible example, as shown in FIG. 20, the first node may be the edge 1, and the second node may be the edge 2. Two interfaces on the edge 1 and the edge 2 are bound to VRF 1 and VRF 2 respectively. The edge 2 receives a prefix: 10.1.1.0/24 of a private network route through the interface bound to the VRF 1, and the edge 2 receives a prefix: 20.1.1.0/24 of the private network route through the interface bound to the VRF 2. A locator route locator 2 is configured on the edge 2, and a segment address of the locator 2 is from 201 to 300. The edge 2 may separately allocate, in the locator 2 of the edge 2, VPN SIDs to a VPN route corresponding to the VRF 1 and a VPN route corresponding to the VRF 2, and obtain a local SID table of the edge 2, where the local SID table of the edge 2 is shown in FIG. 18. After allocating the VPN SIDs to the private network routes of the edge 2, the edge 2 may further convert the private network route (for example, an IPv4 route) into a BGP VPNv4 route and advertise the BGP VPNv4 route to the edge 1 via a BGP neighbor relationship. The VPNv4/EVPN private network route advertised by the edge 2 to the edge 1 carries a route prefix: 20.1.1.0/24, a NextHop of the route: the edge 2, and a VPN SID: 201.

After receiving the BGP VPNv4 route advertised by the edge 2, the edge 1 interleaves the route with the corresponding VPN instance routing table. Then, the edge 1 further needs to convert the VPNv4 route into a common IPv4 route, and advertise the common IPv4 route to a node on a user side.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially performed, or may be completely performed based on an actual situation. This is not limited herein. All or some of any features in any embodiment of this application may be freely and randomly combined with each other in the case of no conflict. A combined technical solution also falls within the scope of this application.

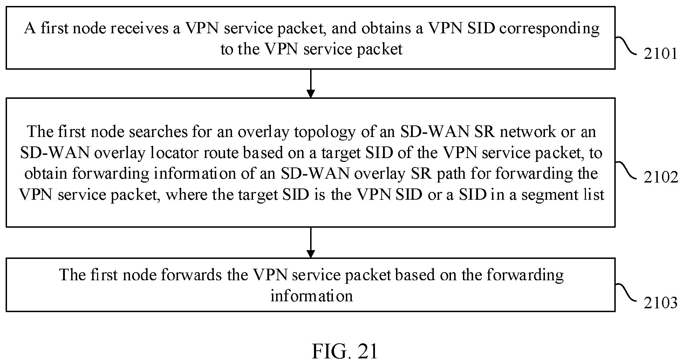

Based on the communication method for an SD-WAN shown in FIG. 16, an embodiment of this application further provides a packet processing method based on the communication method. For example, FIG. 21 is a flowchart of a packet processing method. The method may be applied to the SD-WAN overlay SR network shown in FIG. 8. Refer to FIG. 21. The method includes step 2101 to step 2103.

Step 2101: A first node receives a VPN service packet, and obtains a VPN SID and a segment list that correspond to the VPN service packet, where the segment list identifies one piece of path information in an SR policy.

In this embodiment, when the first node is an edge node, the first node may receive, through an interface bound to a VPN instance, the VPN service packet sent by a user side. After receiving the VPN service packet, the first node may search a corresponding VPN instance routing and forwarding table, and match a route prefix of the VPN service packet, to obtain the VPN SID corresponding to the VPN service packet; and forward the SR policy of the packet. It may be understood that the SR Policy that is from an edge 1 to an edge 2 and that is obtained by the edge 1 may include a plurality of pieces of path information. Each piece of path information corresponds to a segment list, and the segment list includes a SID of at least one node or tunnel on the path.

Step 2102: The first node searches an overlay topology of an SD-WAN overlay SR network or an SD-WAN overlay locator route based on a target SID of the VPN service packet, to obtain forwarding information of an SD-WAN overlay SR path for forwarding the VPN service packet, where the target SID is the VPN SID or a SID in a segment list.

In this embodiment, after receiving the VPN service packet, the first node may search, based on the target SID of the VPN service packet, an overlay routing table, stored in the first node, of the SD-WAN overlay SR network. If a SID in the overlay routing table stored in the first node is the same as the target SID, the first node determines the forwarding path information of the VPN service packet based on tunnel or node information corresponding to the SID, in the overlay routing table, hit by the target SID.

If a SID in the overlay routing table stored in the first node is the same as the target SID, the first node may search, based on the target SID of the VPN service packet, the SD-WAN overlay locator route stored in the first node, to obtain the forwarding path information of the VPN service packet.

Step 2103: The first node forwards the VPN service packet based on the forwarding information.

In this embodiment, before forwarding the VPN service packet, the first node further needs to encapsulate the VPN service packet. Specifically, the first node may perform generic routing encapsulation (generic routing encapsulation, GRE) on the VPN service packet. The VPN SID of the VPN service packet and a SID list of a TE tunnel in the segment list corresponding to the VPN service packet are encapsulated into a GRE header. When forwarding the packet, the first node forwards the packet via an outer GRE header. It may be understood that the first node may encapsulate the VPN service packet through GRE, or the first node may encapsulate the VPN service packet in another encapsulation manner, for example, a virtual extensible local area network (virtual extensible LAN, VXLAN).

A locator configured by the node may be a space segment identified by a number or a segment route identified by an IPv6 address. Therefore, the VPN SID allocated in locator space and SIDs of a node and a tunnel that are allocated in locator space each may also be a specific numeric ID or an IPv6 address. GRE for encapsulating the SID varies with a format of the SID.

When the SIDs of the node and the tunnel or the VPN SID is a numeric ID, the first node may encapsulate the packet in an independent ID over GRE manner. For details, refer to FIG. 14a and FIG. 14b. Details are not described herein again. When the SIDs of the node and the tunnel or the VPN SID is an IPv6 address, the first node may encapsulate the packet in an SRv6 over GRE manner, that is, encapsulating an IPv6 packet header into the GRE header. For details, refer to FIG. 15a and FIG. 15b. Details are not described herein again.

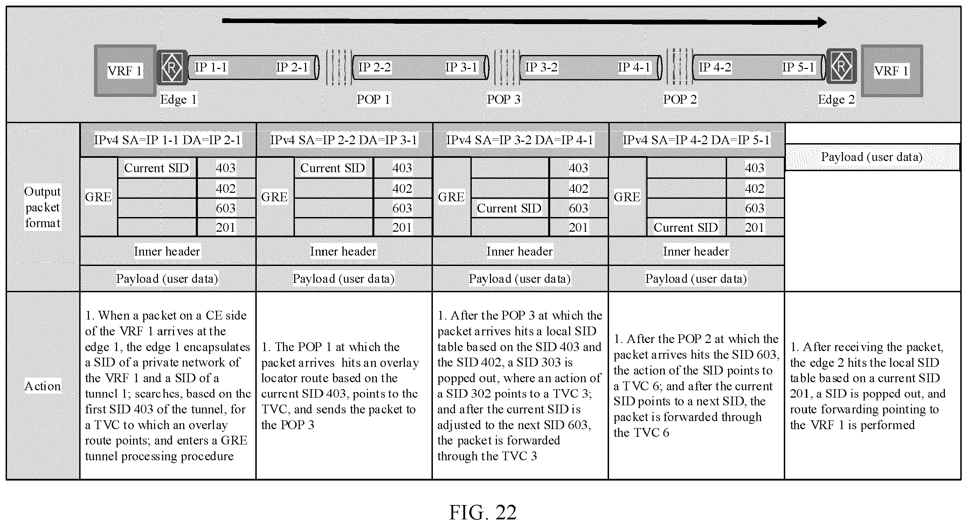

The following describes, by using the SD-WAN overlay SR network shown in FIG. 20 as an example, a process of forwarding, in the SD-WAN overlay SR network, the VPN service packet received by the edge 1. For example, FIG. 22 is a diagram of packet forwarding in an SR-TE mode in an SD-WAN overlay SR network.

After receiving, through the interface bound to the VPN instance, the VPN service packet sent by the user side, the edge 1 searches the corresponding VPN instance routing and forwarding table, to obtain that the VPN SID corresponding to the VPN service packet is 201 and the tunnel for forwarding the VPN service packet is a tunnel 1, where a tunnel label stack corresponding to the tunnel 1 is (403, 402, and 603). Then, the edge 1 encapsulates the VPN SID of the VPN service packet and the SIDs in the tunnel label stack corresponding to the tunnel 1 into the GRE header of the VPN service packet, and uses the first SID (403) in the tunnel label stack corresponding to the tunnel 1 as the target SID. The edge 1 searches, based on the target SID 403, the overlay topology table, stored in the edge 1, of the SD-WAN SR network, but does not hit the SID of the edge 1 or a SID of a TVC tunnel associated with the edge 1. The edge 1 continues to search the SD-WAN overlay locator route on the edge 1 based on the target SID 403, to hit the overlay locator 4 route, that is, it may be determined that the VPN service packet needs to be forwarded through the TVC 5. After determining the tunnel for forwarding the VPN service packet, the edge 1 needs to perform SD-WAN tunnel encapsulation on the packet into which the GRE header is encapsulated, that is, encapsulating an IPv4 packet header into a header of the VPN service packet into which the GRE packet header is encapsulated. The IPv4 packet header includes an IPv4 SA: IP 1-1 and a destination address DA: IP 2-1.

After receiving the VPN service packet through the TVC 5, the POP 1 enters a GRE tunnel processing procedure based on the source and destination IP addresses and the protocol field of the VPN service packet. The POP 1 obtains the target SID of the VPN service packet from the GRE packet header. Then, the POP 1 searches, based on the target SID 403, the overlay topology table, stored in the POP 1, of the SD-WAN overlay SR network, but does not hit the SID of the POP 1 or a SID of a TVC tunnel associated with the POP 1. The POP 1 continues to search the SD-WAN overlay locator route on the POP 1 based on the target SID 403, to hit the overlay locator 4 route, that is, it may be determined that the VPN service packet needs to be forwarded through the TVC 1. After determining the tunnel for forwarding the VPN service packet, the POP 1 needs to perform SD-WAN tunnel encapsulation on the packet into which the GRE header is encapsulated, that is, encapsulating an IPv4 packet header into a header of the VPN service packet into which the GRE packet header is encapsulated. The IPv4 packet header includes an IPv4 SA: IP 2-2 and a destination address DA: IP 3-1.

After receiving the VPN service packet through the TVC 1, the POP 3 enters a GRE tunnel processing procedure based on the source and destination IP addresses and the protocol field of the VPN service packet. The POP 3 obtains the target SID of the VPN service packet from the GRE packet header. Then, the POP 3 searches, based on the target SID 403, the overlay topology table, stored in the POP 3, of the SD-WAN overlay SR network, to hit the overlay topology table stored in the POP 3. Because the POP 3 node is identified by the target SID 403 in the overlay topology table in the POP 3, the POP 3 pops up the target SID 403, and the target SID points to a next SID carried in the GRE packet header, that is, the target SID changes to 402. The POP 3 continues to search, based on the target SID 402, the overlay topology table, stored in the POP 3, of the SD-WAN overlay SR network, to hit the overlay topology table stored in the POP 3. The POP 3 learns, from the overlay topology table stored in the POP 3, that the target SID 402 points to the TVC 3, that is, it may be determined that the VPN service packet needs to be forwarded through the TVC 3. The POP 3 continues to point the target SID to a next SID carried in the GRE packet header, that is, the target SID changes to 603. Then, the POP 3 needs to perform SD-WAN tunnel encapsulation on the packet into which the GRE header is encapsulated, that is, encapsulating an IPv4 packet header into a header of the VPN service packet into which the GRE packet header is encapsulated. The IPv4 packet header includes an IPv4 SA: IP 3-2 and a destination address DA: IP 4-1.

After receiving the VPN service packet through the TVC 1, the POP 2 enters a GRE tunnel processing procedure based on the source and destination IP addresses and the protocol field of the VPN service packet. The POP 2 obtains the target SID of the VPN service packet from the GRE packet header. Then, the POP 2 searches, based on the target SID 603, the overlay topology table, stored in the POP 2, of the SD-WAN overlay SR network, to hit the overlay topology table stored in the POP 2. The POP 2 learns, from the overlay topology table stored in the POP 2, that the target SID 603 points to the TVC 6, that is, it may be determined that the VPN service packet needs to be forwarded through the TVC 6. The POP 2 continues to point the target SID to a next SID carried in the GRE packet header, that is, the target SID changes to 201. Then, the POP 3 needs to perform SD-WAN tunnel encapsulation on the packet into which the GRE header is encapsulated, that is, encapsulating an IPv4 packet header into a header of the VPN service packet into which the GRE packet header is encapsulated. The IPv4 packet header includes an IPv4 SA: IP 4-2 and a destination address DA: IP 5-1.

After receiving the VPN service packet through the TVC 6, the edge 2 enters a GRE tunnel processing procedure based on the source and destination IP addresses and the protocol field of the VPN service packet. The edge 2 obtains that the target SID carried in the GRE header is 201. Then, the edge 2 searches, based on the target SID 201, the overlay topology table, stored in the POP 1, of the SD-WAN overlay SR network, but does not hit the SID of the edge 2 or a SID of a TVC tunnel associated with the edge 2. The edge 2 continues to search the SD-WAN overlay locator route on the edge 2 based on the target SID 201, to hit the overlay locator 2 route. The locator 2 on the edge 2 does not have an outbound interface (the outbound interface is N/A). The edge 2 may search the local SID table of the edge 2 based on the target SID 201, to hit the VRF 1. In this case, the edge 2 may continue to forward the service packet via the VRF 1.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially performed, or may be completely performed based on an actual situation. This is not limited herein. In addition, all or some of any features in the foregoing embodiments may be freely and randomly combined with each other in the case of no conflict. A combined technical solution also falls within the scope of this application.

In the foregoing embodiments, in the SD-WAN overlay SR network, both the overlay topology information of each node and the SD-WAN overlay locator route of each node may be diffused at the overlay layer via an extended BGP protocol packet. Then, a BGP-SPF protocol is used as an example to describe an extension process of the BGP-SPF protocol.

A controller in the SD-WAN overlay SR network may extend an address family of the BGP-SPF protocol, and add the overlay topology information and the SD-WAN overlay locator route in the foregoing embodiments. For example, the controller extends the address family according to the BGP-SPF protocol, and adds two types of network layer reachability information (network layer reachability information, NLRI) to the BGP-SPF address family, to carry the overlay topology information and the SD-WAN overlay locator route in the foregoing embodiments.

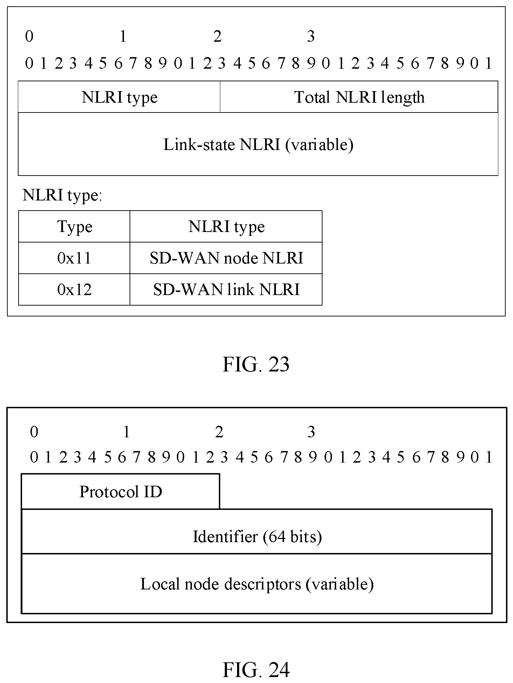

In a possible example, a format of the NLRI type newly added to the address family of the BGP-SPF protocol is shown in FIG. 23. The NLRI includes: an NLRI type field, a total NLRI length field, and a value (variable) field used to carry link-state NLRI.

It should be noted that, in a plurality of TLV fields in this specification and related accompanying drawings of this application, the value field is often represented by specific information carried in the value field. A person skilled in the art may understand that the foregoing expression form merely indicates content carried in the value field, and should not be construed as a limitation on naming of the field.

The NLRI type field identifies a type of NLRI, and the type of NLRI includes SD-WAN node NLRI and SD-WAN link NLRI. When type=0x11, it indicates that network layer reachability information of an SD-WAN overlay node is carried. When type=0x12, it indicates that network layer reachability information of an SD-WAN overlay link is carried.

The total NLRI length field identifies a length of information carried in the NLRI.

The link-state NLRI (variable) field identifies content carried in the NLRI.

Two types of NLRI are added, so that the BGP-SPF protocol packet can carry node information and link information at an SD-WAN overlay network layer.

In a possible example, when NLRI type=0x11, the node information carried in the NLRI is the node information at the SD-WAN overlay network layer. A format of information carried in the link-state NLRI (variable) field of the NLRI is shown in FIG. 24. A protocol ID identifies a manner of generating the SD-WAN node information. For example, the protocol ID is 5, where 5 indicates the SD-WAN node information generated through static configuration.

An identifier identifies a management domain that can be routed and to which NLRI information collected or distributed via the BGP-SPF protocol belongs. For example, the identifier is 0, where 0 indicates that the NLRI collected and distributed via the BGP-SPF is in the same management domain that can be routed, and another value is reserved. Transceiver nodes need to have a same identifier.

A local node descriptors field is variable, and includes a sub-TLV indicating information about a local node.

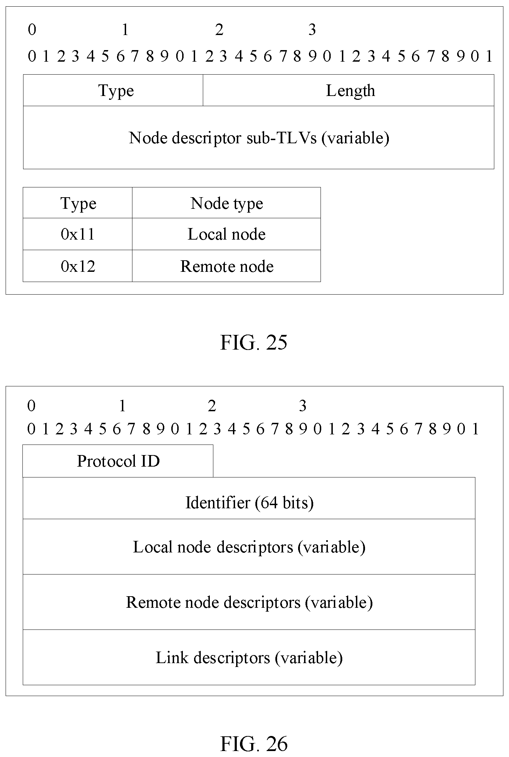

For example, a structure of the sub-TLV indicating information about the local node is shown in FIG. 25, and includes a type field, a length field, and a node descriptor sub-TLV format (variable) field.

The type field identifies a type of a node, and a type of a site node includes a local node and a remote node. For example, when type=0x100, it indicates that the node is a local node. When type=0x101, it indicates that the node is a remote node. It may be understood that, in embodiments of this application, nodes may be classified into a node in the SD-WAN overlay network and nodes at two ends of a link in the SD-WAN overlay network. When the nodes carried in the NLRI are the nodes at the two ends of the link, the type of the node includes a remote node (remote node) and a local node (local node).

The length field identifies a length of information about the node.

The node descriptor sub-TLV format field identifies the information about the node.

In a possible example, when NLRI type=0x12, the node information carried in the NLRI is the link information at the SD-WAN overlay network layer. A format of information carried in the link-state NLRI (variable) field of the NLRI is shown in FIG. 26. A protocol ID identifies a manner of generating the SD-WAN node information. For example, the protocol ID is 7, where 7 indicates the SD-WAN link information generated through dynamic configuration via the BGP protocol.

An identifier identifies a management domain that can be routed and to which NLRI information collected or distributed via the BGP-SPF protocol belongs. For example, the identifier is 0, where 0 indicates that the NLRI collected and distributed via the BGP-SPF is in the same management domain that can be routed, and another value is reserved. Transceiver nodes need to have a same identifier.

A local node descriptors field is variable, and includes a sub-TLV indicating information about a local node.

A remote node descriptors field is variable, and includes a sub-TLV indicating information about a remote node. For formats of the sub-TLV of the information about the local node and the sub-TLV of the information about the remote node, refer to FIG. 25. Details are not described herein again.

A link descriptors field is variable, and includes a sub-TLV indicating link information. The link information includes a link TNP.

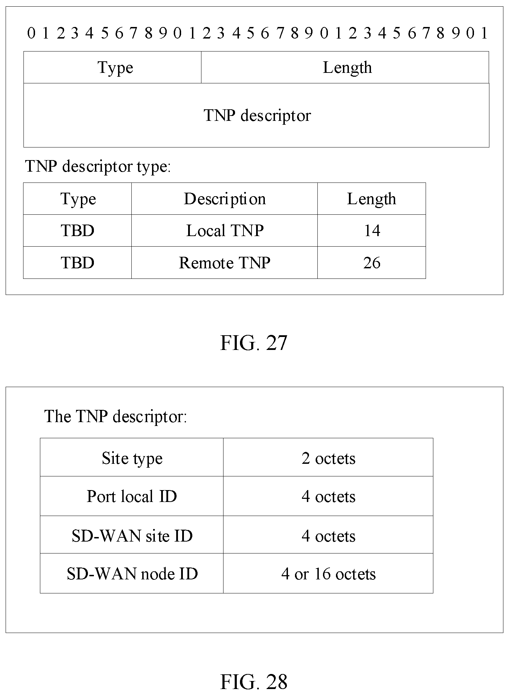

For example, FIG. 27 is a diagram of a structure of a sub-TLV indicating link information. As shown in FIG. 27, the sub-TLV includes a type field, a length field, and a value field used to carry a TNP descriptor field. The type field identifies a type of a TNP, and the type of the TNP includes a local TNP and a remote TNP. The length field identifies a length of the TNP. The TNP descriptor field identifies specific information about the TNP.

In a possible example, as shown in FIG. 27, a type of the local TNP may be TBD with a length of 14 octets, and a type of the remote TNP may be TBD with a length of 26 octets.

In a possible example, specific information identified by the TNP descriptor field is shown in FIG. 28, and includes: a site type (2 octets), a port local ID (4 octets), an SD-WAN site ID (4 octets), and an SD-WAN node ID (4 or 16 octets).

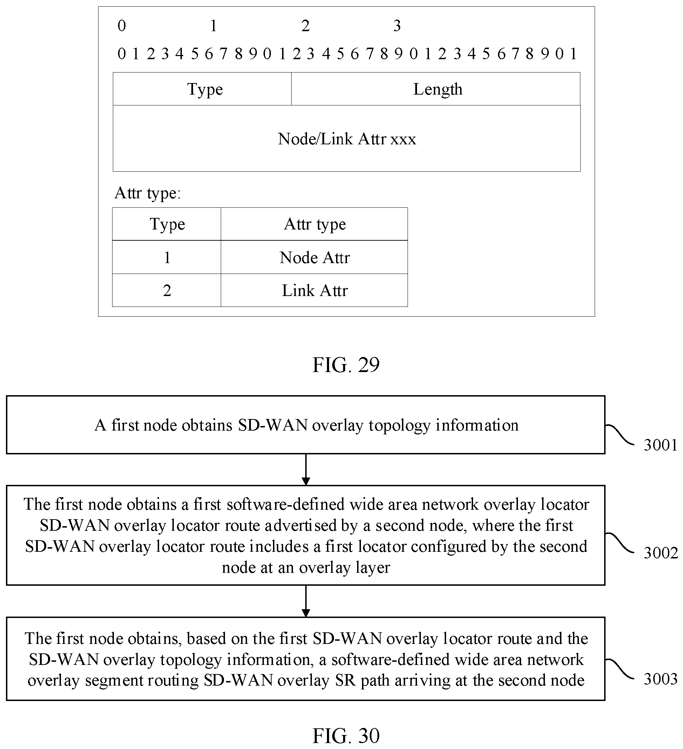

In addition to defining the format of the BGP-SPF node NLRI and the format of the BGP-SPF link NLRI, the TNP descriptor field further defines a format of a BGP-SPF node/link attribute (node/link Attr). FIG. 29 is a diagram of a structure of a TLV of BGP-SPF node Attr, including: a type field, a length field, and a node/link Attr field. The type field identifies a type of Attr, and the type of Attr includes node Attr and link Attr. The length field identifies a length of Attr. The node/link Attr field identifies specific information about Attr.

The following describes, based on the communication process for the SD-WAN described in the foregoing, a communication method for an SD-WAN provided in embodiments of this application. It may be understood that the method is another expression of the communication process for the SD-WAN described in the foregoing, and the method and the process are combined. The method is proposed based on the communication process for the SD-WAN described in the foregoing. For some or all content in the method, refer to the foregoing descriptions about the communication process for the SD-WAN.

FIG. 30 is a schematic flowchart of a communication method for an SD-WAN according to an embodiment of this application. It may be understood that the method may be performed by any network device with a data forwarding function, for example, a router or a switch. As shown in FIG. 30, the method for the SD-WAN includes step 3001 to step 3003.

Step 3001: A first node obtains SD-WAN overlay topology information.

In this embodiment, the first node may obtain the SD-WAN overlay topology information via a BGP packet. For a specific process in which the first node obtains the SD-WAN overlay topology information, refer to step 703 in the foregoing embodiment.

In a possible example, the BGP packet may be a BGP-SPF protocol packet or a BGP-LS protocol packet. The BGP packet includes first NLRI and second NLRI, the first NLRI is used to carry node information of an SD-WAN tunnel, and the second NLRI is used to carry link information of the SD-WAN tunnel.

In a possible example, the node information of the SD-WAN tunnel may include a local node identifier of the SD-WAN tunnel and a remote node identifier of the SD-WAN tunnel.

In a possible example, the node information of the SD-WAN tunnel may further include local TNP information and remote TNP information of the SD-WAN tunnel.

In a possible example, the information about the SD-WAN tunnel includes at least one of the following: a link identifier of the SD-WAN tunnel, link quality of the SD-WAN tunnel, and a status of the SD-WAN tunnel.

In a possible example, in an SR-TE mode, before obtaining the SD-WAN overlay topology information, the first node further needs to allocate, in locator space of the first node, a corresponding link segment identifier link SID to each SD-WAN tunnel associated with the first node, and allocate, in a locator of the first node, a node segment identifier node SID to the first node.

In a possible example, in the SR-TE mode, after obtaining the SD-WAN overlay topology information, the first node further needs to send the SD-WAN overlay topology information to a controller.

Step 3002: The first node receives a first SD-WAN overlay locator route advertised by a second node, where the first SD-WAN overlay locator route includes a first locator configured by the second node at an overlay layer.

In this embodiment, the first node further needs to receive the SD-WAN locator route advertised by the second node. For a specific process in which the first node receives the SD-WAN locator route advertised by the second node, refer to step 704 or step 1605 in the foregoing embodiment.

In a possible example, the first node further needs to advertise a second SD-WAN overlay locator route, where the second SD-WAN overlay locator route comprises a second locator configured by the first node at the overlay layer. It may be understood that, in this embodiment, a sequence of receiving, by the first node, the first SD-WAN overlay locator route advertised by the second node and advertising, by the first node, the second SD-WAN overlay locator route is not limited.

In a possible example, the first node receives a third SD-WAN overlay locator route sent by a third node, where the third SD-WAN overlay locator route includes a third locator configured by the third node at the overlay layer.

In a possible example, the first locator corresponds to a space segment identified by a number or a network segment identified by an IPv6 address.

Step 3003: The first node obtains, based on the first SD-WAN overlay locator route and the SD-WAN overlay topology information, a software-defined wide area network overlay segment routing SD-WAN overlay SR path arriving at the second node.

In this embodiment, after receiving the first SD-WAN overlay locator route advertised by the second node, the first node may obtain, based on the SD-WAN overlay topology information stored in the first node, the SD-WAN overlay SR path arriving at the second node. For a specific process in which the first node obtains the SD-WAN overlay SR path arriving at the second node, refer to step 705 in the foregoing embodiment.

In a possible example, when both the first node and the second node are edge nodes in an SD-WAN overlay SR network, the first node further needs to receive a first VPN route sent by the second node. The first VPN route includes a first VPN SID, and the first VPN SID is a SID allocated, in the first locator, by the second node.

In a possible example, the first node iterates the first SD-WAN overlay locator route based on the first VPN SID, to obtain forwarding information of the SD-WAN overlay SR path.

In a possible example, the first node further needs to allocate a second VPN SID in the locator of the first node, and send a second VPN route to the second node, where the second VPN route includes the second VPN SID.

In a possible example, in the SR-TE mode, the first node receives an SD-WAN overlay SR policy sent by the controller, where the SD-WAN overlay SR policy includes a segment identifier list SID list corresponding to the SD-WAN overlay SR path.

In a possible example, the SD-WAN overlay SR policy is an SD-WAN overlay SR TE policy.

In a possible example, the SD-WAN overlay SR policy is an SD-WAN overlay SRv6 policy.

In a possible example, the first node and the second node are separated by at least one POP node.

For example, an embodiment of this application further provides a schematic flowchart of a communication method for an SD-WAN. It may be understood that the method may be applied to an SR-TE mode, the method may be performed by a controller in an SD-WAN overlay SR network, and the method includes step 3101 to step 3103.

Step 3101: The controller obtains SD-WAN overlay topology information.

In this embodiment, the controller may obtain the SD-WAN overlay topology information via a BGP packet. For a specific process in which the controller obtains the SD-WAN overlay topology information, refer to step 1604 in the foregoing embodiment.

In a possible example, the BGP packet may be a BGP-SPF protocol packet or a BGP-LS protocol packet. The BGP packet includes first NLRI and second NLRI, the first NLRI is used to carry node information of an SD-WAN tunnel, and the second NLRI is used to carry link information of the SD-WAN tunnel.

In a possible example, the node information of the SD-WAN tunnel may include a local node identifier of the SD-WAN tunnel and a remote node identifier of the SD-WAN tunnel.

In a possible example, the node information of the SD-WAN tunnel may further include local TNP information and remote TNP information of the SD-WAN tunnel.

In a possible example, the information about the SD-WAN tunnel includes at least one of the following: a link identifier of the SD-WAN tunnel, link quality of the SD-WAN tunnel, and a status of the SD-WAN tunnel.

Step 3102: The controller obtains an SD-WAN overlay SR policy based on the SD-WAN overlay topology information, where the SD-WAN overlay SR policy includes a SID list corresponding to an SD-WAN overlay SR path.

In this embodiment, in the SR-TE mode, the controller may generate an SD-WAN overlay SR policy between any two edge nodes in the SD-WAN overlay SR network. For a specific process in which the controller obtains the SD-WAN overlay SR policy based on the SD-WAN overlay topology information, refer to step 1605. Details are not described herein again.

Step 3103: The controller sends the SD-WAN overlay SR policy to a first node.

In this embodiment, after generating an SD-WAN overlay SR policy from the first node to another edge node in the SD-WAN SR network, the controller further needs to send the SD-WAN overlay SR policy to the first node. For a specific process in which the controller sends the SD-WAN overlay SR policy to the first node, refer to step 1605. Details are not described herein again.

In a possible example, the SD-WAN overlay SR policy is an SD-WAN overlay SR TE policy.

In a possible example, the SD-WAN overlay SR policy is an SD-WAN overlay SRv6 policy.

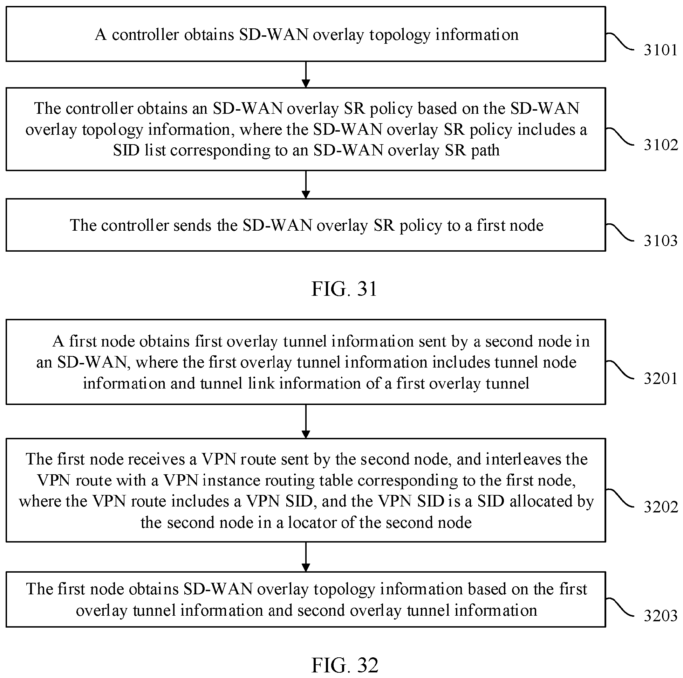

For example, an embodiment of this application further provides a communication method for a software-defined local area network SD-WAN. As shown in FIG. 32, the method includes step 3201 to step 3203.

Step 3201: A first node obtains first overlay tunnel information sent by a second node in an SD-WAN, where the first overlay tunnel information includes tunnel node information and tunnel link information of a first overlay tunnel.

In this embodiment, the first node and the second node are any two nodes in an SD-WAN overlay SR network. For a specific process in which the first node obtains the overlay tunnel information sent by the second node, refer to step 703 in the foregoing embodiments. Details are not described herein again.

Step 3202: The first node obtains second overlay tunnel information sent by a third node, where the second overlay tunnel information includes tunnel node information and tunnel link information of a second overlay tunnel.

In this embodiment, the first node and the third node are any two nodes in the SD-WAN overlay SR network. For a specific process in which the first node obtains the overlay tunnel information sent by the third node, refer to step 703 in the foregoing embodiments. Details are not described herein again.

In a possible example, the SD-WAN overlay topology information includes node information of an SD-WAN tunnel and link information of the SD-WAN tunnel.

In a possible example, the node information of the SD-WAN tunnel includes node SID information of the SD-WAN tunnel, and the link information of the SD-WAN tunnel includes link SID information of the SD-WAN tunnel.

Step 3203: The first node obtains the SD-WAN overlay topology information based on the first overlay tunnel information and the second overlay tunnel information.

In this embodiment, the first node generates topology information of the SD-WAN overlay SR network based on overlay tunnel information sent by another node in the SD-WAN overlay SR network. For a process in which the first node generates the topology information of the SD-WAN overlay SR network, refer to step 703. Details are not described herein again.

The following continues to describe, based on the packet processing process in the SD-WAN overlay SR network described in the foregoing, a packet processing method provided in embodiments of this application. It may be understood that the method is another expression of the packet processing process in the SD-WAN overlay SR network described in the foregoing, and the method and the process are combined. The method is proposed based on the packet processing process in the SD-WAN overlay SR network described in the foregoing. For some or all content in the method, refer to the foregoing descriptions about the packet processing process in the SD-WAN overlay SR network.

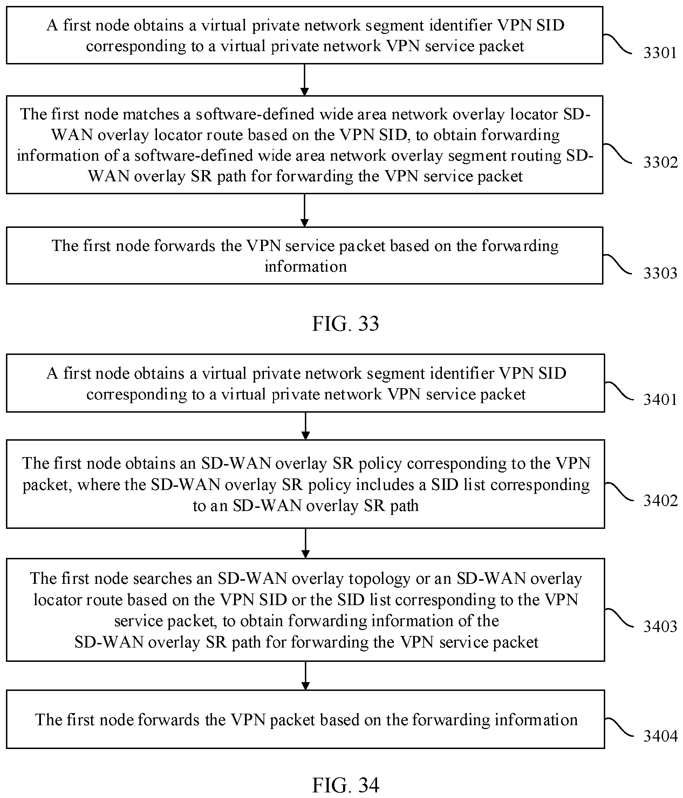

FIG. 33 is a schematic flowchart of a packet processing method according to an embodiment of this application. It may be understood that the method may be performed by any network device with a data forwarding function, for example, a router or a switch. As shown in FIG. 33, the packet processing method includes step 3301 to step 3303.

Step 3301: A first node obtains a virtual private network segment identifier VPN SID corresponding to a virtual private network VPN service packet.

In this embodiment, after receiving the VPN service packet, the first node needs to obtain, from the VPN service packet, the VPN SID corresponding to the VPN service packet. For a specific process in which the first node obtains the virtual private network segment identifier VPN SID corresponding to the virtual private network VPN service packet, refer to step 1301. Details are not described herein again.

In a possible example, the VPN service packet includes the VPN SID.

Step 3302: The first node matches a SD-WAN overlay locator route based on the VPN SID, to obtain forwarding information of a software-defined wide area network overlay segment routing SD-WAN overlay SR path for forwarding the VPN service packet.

In this embodiment, after receiving the VPN SID corresponding to the VPN service packet, the first node may match the SD-WAN overlay locator route of the first node based on the VPN SID, to obtain the forwarding information of the VPN service packet. For a specific process in which the first node obtains the forwarding information of the SD-WAN overlay SR path for forwarding the VPN service packet, refer to step 1302. Details are not described herein again.

Step 3303: The first node forwards the VPN service packet based on the forwarding information.

In this embodiment, after obtaining the forwarding information of the VPN service packet, the first node may forward the VPN service packet based on the forwarding information. For a specific process in which the first node forwards the service packet based on the forwarding information, refer to step 1303. Details are not described herein again.

In a possible example, before the first node forwards the VPN service packet based on the forwarding information, the method further includes: The first node encapsulates the VPN SID into a generic routing encapsulation GRE packet header of the VPN service packet.

In a possible example, the GRE packet header includes a source route entry SRE, and the SRE is used to carry the VPN SID.

In a possible example, the VPN SID is an IPv6 address, and an IPv6 packet header of the GRE packet header is used to carry the VPN SID.

For example, an embodiment of this application further provides a schematic flowchart of a packet processing method. It may be understood that the method may be applied to an SR-TE mode, as shown in FIG. 34, the method includes step 3401 to step 3404.

Step 3401: A first node obtains a virtual private network segment identifier VPN SID corresponding to a virtual private network VPN service packet.

Step 3402: The first node obtains an SD-WAN overlay SR policy corresponding to the VPN service packet, where the SD-WAN overlay SR policy includes a SID list corresponding to an SD-WAN overlay SR path.

In this embodiment, after obtaining the VPN service packet, the first node needs to obtain the VPN SID and the SD-WAN overlay SR policy that correspond to the VPN service packet.

In a possible example, the first node may directly obtain, from the VPN service packet, the VPN SID and the SD-WAN overlay SR policy that correspond to the VPN service packet.

In a possible example, when the first node is an edge node, the first node may obtain, based on a VPN instance routing and forwarding table stored in the first node, the VPN SID corresponding to the VPN service packet.

For a specific process in which the first node obtains the VPN SID and the SD-WAN overlay SR policy that correspond to the VPN service packet, refer to step 2101 in the foregoing embodiment. Details are not described herein again.

Step 3403: The first node searches an SD-WAN overlay topology or an SD-WAN overlay locator route based on the VPN SID or the SID list that corresponds to the VPN service packet, to obtain forwarding information of the SD-WAN overlay SR path for forwarding the VPN service packet.

In this embodiment, after receiving the VPN service packet, the first node may search, based on the target SID of the VPN service packet, an overlay routing table, stored in the first node, of an SD-WAN overlay SR network. If a SID in the overlay routing table stored in the first node is the same as the target SID, the first node determines forwarding path information of the VPN service packet based on tunnel or node information corresponding to the SID, in the overlay routing table, hit by the target SID. The target SID is either the VPN SID or a SID in the SID list.

For a specific process in which the first node determines the forwarding path information of the VPN service packet, refer to step 2102 in the foregoing embodiment. Details are not described herein again.

Step 3404: The first node forwards the VPN service packet based on the forwarding information.

In this embodiment, before forwarding the VPN service packet, the first node further needs to encapsulate the VPN service packet.

In a possible example, the first node encapsulates the VPN SID and the SID list into a generic routing encapsulation GRE packet header of the VPN service packet.

In a possible example, the GRE packet header includes a source route entry SRE, and the SRE is used to carry the VPN SID and the SID list.

In a possible example, when the VPN SID and the SID in the SID list are IPv6 addresses, an IPv6 address of the GRE packet header is used to carry the VPN SID and the SID list.

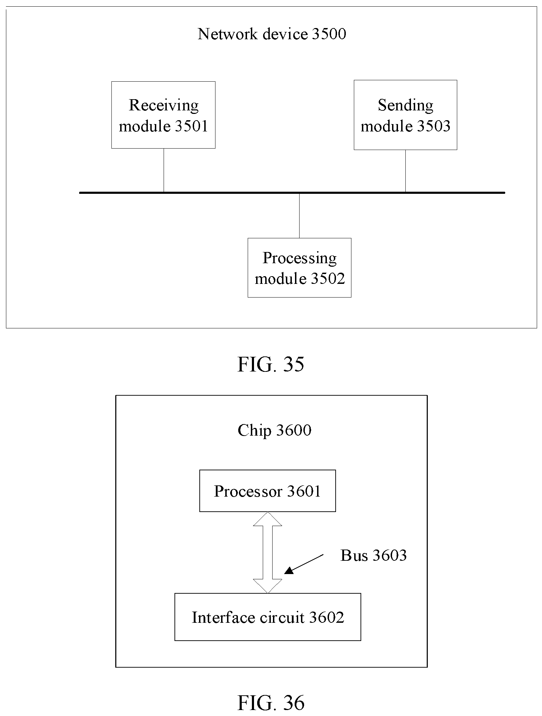

It may be understood that for a specific process in which the first node forwards the VPN service packet based on the forwarding information and encapsulates the VPN service packet before forwarding the VPN service packet, refer to step 2103 in the foregoing embodiments. Details are not described herein again. For example, FIG. 35 is a diagram of a structure of a network device according to an embodiment of this application. As shown in FIG. 35, the network device 3500 includes a receiving module 3501, a processing module 3502, and a sending module 3503.

The receiving module 3501 is configured to receive topology information that is of an SD-WAN overlay topology and that is sent by another network device or a controller in an SD-WAN, and receive an SD-WAN overlay locator route advertised by the another network device in the SD-WAN.

In some possible examples, the receiving module 3501 is further configured to receive a VPN route sent by a first edge network device in the SD-WAN. The VPN route carries a VPN SID, and the VPN SID is a SID allocated by the first edge network device in a locator of the first edge network device.

In some possible examples, the receiving module is further configured to receive an SR policy delivered by the controller. The SR policy includes an identifier of the first edge network device and a SID list corresponding to an SD-WAN overlay SR path arriving at the first edge network device.

In some possible examples, the receiving module 3501 is further configured to receive a VPN service packet.

The processing module 3502 is configured to determine, based on the SD-WAN overlay route and the SD-WAN overlay topology information that are received by the receiving module, a shortest SD-WAN overlay SR path from the current network device 3500 to another network device in the SD-WAN.

In some possible examples, the processing module 3502 is further configured to allocate, in locator space of the network device 3500, the VPN SID to the VPN route.

In some possible examples, the processing module 3502 is further configured to allocate, in the locator space of the network device 3500, a node identifier node SID to the network device 3500, and allocate a link segment identifier link SID to each SD-WAN tunnel associated with the network device 3500.

In some possible examples, the processing module 3502 is further configured to obtain the VPN SID corresponding to the VPN service packet received by the receiving module 3501, and obtain the segment routing policy SR policy corresponding to the VPN service packet. The processing module 3502 is configured to search an SD-WAN overlay topology or an SD-WAN overlay locator route based on the VPN SID or the SID list that corresponds to the VPN service packet, to obtain forwarding information of the SD-WAN overlay SR path for forwarding the VPN service packet.

The sending module 3503 is configured to advertise the SD-WAN overlay locator route in the SD-WAN. The SD-WAN overlay locator includes a locator configured by the network device 3500 at an overlay layer.

In some possible examples, the sending module 3503 is further configured to send the SD-WAN overlay topology information stored in the network device 3500 to the controller.

In some possible examples, the sending module 3503 is configured to send the VPN service packet based on the forwarding information that is of the SD-WAN overlay SR path for forwarding the VPN service packet and that is determined by the processing module 3502.

The embodiment of the network device described in FIG. 35 is merely an example. For example, division into modules is merely logical function division and may be other division during actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module.

For example, each module in FIG. 35 may be implemented in a form of hardware, or may be implemented in a form of a software functional module. For example, when software is used for implementation, the processing module 3502 may be implemented by a software functional module generated after the at least one processor 601 in FIG. 6b reads the program code stored in the memory 603. The foregoing modules in FIG. 35 may alternatively be respectively implemented by different hardware in the network device. For example, the processing module 3502 is implemented by a part of processing resources (for example, a core in the multi-core processor) in the at least one processor 601 in FIG. 6b, and the sending module 3503 and the receiving module 3501 are implemented by the interface circuit and a remaining part of the processing resources (for example, another core in the multi-core processor) in the at least one processor 601 in FIG. 6b, or an FPGA, or a programmable device such as a co-processor or the like. It is obvious that the foregoing functional module may be alternatively implemented by using a combination of software and hardware. For example, the sending module 3503 and the receiving module 3501 are implemented by using a hardware programmable device, and the processing module 3502 is implemented by a software functional module generated after the CPU reads the program code stored in the memory.

Based on the method in the foregoing embodiments, an embodiment of this application provides a computer-readable storage medium. The computer-readable storage medium stores a computer program. When the computer program is run on a processor, the processor is enabled to perform the method in the foregoing embodiments.

Based on the method in the foregoing embodiments, an embodiment of this application provides a computer program product. When the computer program product runs on a processor, the processor is enabled to perform the method in the foregoing embodiments.

Based on the method in the foregoing embodiments, an embodiment of this application provides a computing device. The computing device includes a mainboard and a chip. The chip is integrated to the mainboard, and the chip includes at least one memory, configured to store a program. At least one processor is configured to execute the program stored in the memory. When executing the program stored in the memory, the processor is configured to perform the method in the foregoing embodiments. In this embodiment of this application, the computing device may be a network device like a server or a host.

The network device configured to perform the method embodiments in embodiments of this application may alternatively be the chip. FIG. 36 is a diagram of a structure of a chip according to an embodiment of this application. As shown in FIG. 36, a chip 3600 includes one or more processors 3601 and an interface circuit 3602. Optionally, the chip 3600 may further include a bus 3603, the processor 3601 may further include a service core and a security core, and the security core may further include an OTP register (not shown in FIG. 36). When the network device is a chip, an operation implemented based on a communication module in the network device may be implemented based on, for example, the interface circuit in the chip, and an operation implemented based on a processing module in the network device may be implemented based on, for example, the processor in the chip.

The processor 3601 may be an integrated circuit chip, and have a signal processing capability. In an implementation process, steps in the foregoing method can be implemented by using a hardware integrated logical circuit in the processor 3601 or by using instructions in a form of software. The processor 3601 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 3601 may implement or perform the methods and steps that are disclosed in embodiments of this application. The general-purpose processor may be a microprocessor, or the processor may be any conventional processor or the like.

The interface circuit 3602 may be configured to send or receive data, instructions, or information. The processor 3601 may process the data, the instructions, or other information received through the interface circuit 3602, and send, through the interface circuit 3602, information obtained through processing.

Optionally, the chip 3600 further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the interface circuit 3602 may be configured to output an execution result of the processor 3601.

It should be noted that functions corresponding to the processor 3601 and the interface circuit 3602 may be implemented by using a hardware design, may be implemented by using a software design, or may be implemented by using a combination of software and hardware. This is not limited herein.

It should be understood that steps in the foregoing method embodiments may be implemented by using a logic circuit in a form of hardware or instructions in a form of software in the processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, to enable the processor to read information from the storage medium and write the information into the storage medium. It is clear that the storage medium may be a component of the processor. The processor and the storage medium may be disposed in an ASIC.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

It may be understood that various numbers in embodiments of this application are merely for distinguishing for ease of description, and are not intended to limit the scope of embodiments of this application.

## Claims

1. A communication method for a software-defined wide area network SD-WAN, wherein the method comprises:
obtaining, by the first node, SD-WAN overlay topology information;
obtaining, by the first node, a first SD-WAN overlay locator route advertised by a second node, wherein the first SD-WAN overlay locator route comprises a first locator configured by the second node at an overlay layer; and
obtaining, by the first node based on the first SD-WAN overlay locator route and the SD-WAN overlay topology information, SD-WAN overlay SR BE path arriving at the second node.

2. The method according to claim 1, wherein the method further comprises:
advertising, by the first node, a second SD-WAN overlay locator route, wherein the second SD-WAN overlay locator route comprises a second locator configured by the first node at the overlay layer.

3. The method according to claim 1 or 2, wherein both the first node and the second node are edge nodes, and the method further comprises:
receiving, by the first node, a first virtual private network VPN route sent by the second node, wherein the first VPN route comprises a first virtual private network segment identifier VPN SID, and the first VPN SID is a SID allocated by the second node in the first locator.

4. The method according to claim 3, wherein the method further comprises:
iterating, by the first node, the first SD-WAN overlay locator route based on the first VPN SID, to obtain forwarding information of the SD-WAN overlay SR BE path.

5. The method according to any one of claims 1 to 4, wherein both the first node and the second node are edge nodes, and the method further comprises:
allocating, by the first node, a second VPN SID in a locator of the first node; and
sending, by the first node, a second VPN route to the second node, wherein the second VPN route comprises the second VPN SID.

6. The method according to any one of claims 1 to 5, wherein before the obtaining, by the first node, SD-WAN overlay topology information, the method further comprises:
allocating, by the first node in the locator of the first node, a corresponding link segment identifier link SID to each SD-WAN tunnel associated with the first node; and
allocating, by the first node in the locator of the first node, a node segment identifier node SID to the first node.

7. The method according to any one of claims 1 to 6, wherein the method further comprises:
sending, by the first node, the SD-WAN overlay topology information to a controller.

8. The method according to any one of claims 1 to 7, wherein the method further comprises:
receiving, by the first node, a software-defined wide area network overlay segment routing policy SD-WAN overlay SR policy sent by the controller, wherein the SD-WAN overlay SR policy comprises a segment identifier list SID list corresponding to the SD-WAN overlay SR path.

9. The method according to claim 8, wherein the SD-WAN overlay SR policy is an SD-WAN overlay SR TE policy.

10. The method according to claim 8 or 9, wherein the SD-WAN overlay SR policy is an SD-WAN overlay SRv6 policy.

11. The method according to any one of claims 1 to 10, wherein the first node and the second node are separated by at least one POP node.

12. The method according to any one of claims 1 to 11, wherein the method further comprises:
receiving, by the first node, a third SD-WAN overlay locator route sent by a third node, wherein the third SD-WAN overlay locator route comprises a third locator configured by the third node at the overlay layer.

13. The method according to any one of claims 1 to 12, wherein the first locator corresponds to a space segment identified by a number or a network segment identified by an IPv6 address.

14. The method according to any one of claims 1 to 12, wherein the SD-WAN overlay topology information comprises node information of an SD-WAN tunnel and link information of the SD-WAN tunnel.

15. The method according to claim 14, wherein the node information of the SD-WAN tunnel comprises node SID information of the SD-WAN tunnel; and
the link information of the SD-WAN tunnel comprises link SID information of the SD-WAN tunnel.

16. The method according to claim 14 or 15, wherein the first node obtains the SD-WAN overlay topology information via a border gateway protocol BGP packet.

17. The method according to claim 16, wherein the BGP packet is a BGP shortest path first BGP-SPF protocol packet or a BGP link-state protocol BGP-LS protocol packet.

18. The method according to claim 16 or 17, wherein the BGP packet comprises first network layer reachability information NLRI and second network layer reachability information NLRI, the first NLRI is used to carry the node information of the SD-WAN tunnel, and the second NLRI is used to carry the link information of the SD-WAN tunnel.

19. The method according to any one of claims 14 to 18, wherein the node information of the SD-WAN tunnel comprises a local node identifier of the SD-WAN tunnel and a remote node identifier of the SD-WAN tunnel.

20. The method according to claim 19, wherein the node information of the SD-WAN tunnel further comprises local transport network port TNP information and remote TNP information of the SD-WAN tunnel.

21. The method according to any one of claims 14 to 20, wherein the link information of the SD-WAN tunnel comprises one or more of the following: a link identifier of the SD-WAN tunnel, link quality of the SD-WAN tunnel, or a status of the SD-WAN tunnel.

22. A communication method for a software-defined wide area network SD-WAN, comprising:
obtaining, by a controller, SD-WAN overlay topology information;
obtaining, by the controller, an SD-WAN overlay segment routing policy SR policy based on the SD-WAN overlay topology information, wherein the SD-WAN overlay SR policy comprises a segment identifier SID list corresponding to an SD-WAN overlay SR path; and
sending, by the controller, the SD-WAN overlay SR policy to the first node.

23. The method according to claim 22, wherein the SD-WAN overlay SR policy is an SD-WAN overlay SR TE policy.

24. The method according to claim 22 or 23, wherein the SD-WAN overlay SR policy is an SD-WAN overlay SRv6 policy.

25. The method according to any one of claims 22 to 24, wherein the SD-WAN overlay topology information comprises node information of an SD-WAN tunnel and link information of the SD-WAN tunnel.

26. The method according to claim 25, wherein the node information of the SD-WAN tunnel comprises node SID information of the SD-WAN tunnel; and
the link information of the SD-WAN tunnel comprises link SID information of the SD-WAN tunnel.

27. The method according to claim 25 or 26, wherein the first node obtains the SD-WAN overlay topology information via a border gateway protocol BGP packet.

28. The method according to claim 27, wherein the BGP packet is a BGP shortest path first BGP-SPF protocol packet or a BGP link-state protocol BGP-LS protocol packet.

29. The method according to claim 27 or 28, wherein the BGP packet comprises first network layer reachability information NLRI and second network layer reachability information NLRI, the first NLRI is used to carry the node information of the SD-WAN tunnel, and the second NLRI is used to carry the link information of the SD-WAN tunnel.

30. The method according to any one of claims 25 to 29, wherein the node information of the SD-WAN tunnel comprises a local node identifier of the SD-WAN tunnel and a remote node identifier of the SD-WAN tunnel.

31. The method according to claim 30, wherein the node information of the SD-WAN tunnel further comprises local transport network port TNP information and remote TNP information of the SD-WAN tunnel.

32. The method according to any one of claims 25 to 31, wherein the link information of the SD-WAN tunnel comprises one or more of the following: a link identifier of the SD-WAN tunnel, link quality of the SD-WAN tunnel, and a status of the SD-WAN tunnel.

33. A packet processing method, wherein the method comprises:
obtaining, by a first node, a virtual private network segment identifier VPN SID corresponding to a virtual private network VPN service packet;
matching, by the first node, a SD-WAN overlay locator route based on the VPN SID, to obtain forwarding information of a software-defined wide area network overlay segment routing SD-WAN overlay SR path for forwarding the VPN service packet; and
forwarding, by the first node, the VPN service packet based on the forwarding information.

34. The method according to claim 33, wherein the VPN service packet comprises the VPN SID.

35. The method according to claim 33 or 34, wherein before the forwarding, by the first node, the VPN service packet based on the forwarding information, the method further comprises:
encapsulating, by the first node, the VPN SID into a generic routing encapsulation GRE packet header of the VPN service packet.

36. The method according to claim 35, wherein the GRE packet header comprises a source route entry SRE, and the SRE is used to carry the VPN SID.

37. The method according to claim 35, wherein the VPN SID is an IPv6 address, and an IPv6 packet header of the GRE packet header is used to carry the VPN SID.

38. A packet processing method, comprising:
obtaining, by a first node, a virtual private network segment identifier VPN SID corresponding to a virtual private network VPN service packet;
obtaining, by the first node, an SD-WAN overlay SR policy corresponding to the VPN service packet, wherein the SD-WAN overlay SR policy comprises a SID list corresponding to an SD-WAN overlay SR path;
searching, by the first node, an SD-WAN overlay topology or an SD-WAN overlay locator route based on the VPN SID or the SID list that corresponds to the VPN service packet, to obtain forwarding information of the SD-WAN overlay SR path for forwarding the VPN service packet; and
forwarding, by the first node, the VPN service packet based on the forwarding information.

39. The method according to claim 38, wherein the VPN service packet comprises the VPN SID and the SID list.

40. The method according to claim 38 or 39, wherein before the forwarding, by the first node, the VPN service packet based on the forwarding information, the method further comprises:
encapsulating, by the first node, the VPN SID and the SID list into a generic routing encapsulation GRE packet header of the VPN service packet.

41. The method according to claim 40, wherein the GRE packet header comprises a source route entry SRE, and the SRE is used to carry the VPN SID and the SID list.

42. The method according to claim 40, wherein the VPN SID and a SID in the SID list are IPv6 addresses, and an IPv6 address of the GRE packet header is used to carry the VPN SID and the SID list.

43. A communication method, wherein the method comprises:
obtaining, by a first node, first overlay tunnel information sent by a second node in a software-defined local area network SD-WAN, wherein the first overlay tunnel information comprises tunnel node information and tunnel link information of a first overlay tunnel;
obtaining, by the first node, second overlay tunnel information sent by a third node, wherein the second overlay tunnel information comprises tunnel node information and tunnel link information of a second overlay tunnel; and
obtaining, by the first node, the SD-WAN overlay topology information based on the first overlay tunnel information and the second overlay tunnel information.

44. The method according to claim 43, wherein the SD-WAN overlay topology information comprises node information of an SD-WAN tunnel and link information of the SD-WAN tunnel.

45. The method according to claim 44, wherein the node information of the SD-WAN tunnel comprises node SID information of the SD-WAN tunnel; and
the link information of the SD-WAN tunnel comprises link SID information of the SD-WAN tunnel.

46. A first network device, comprising:
a communication module, configured to obtain software-defined local area network SD-WAN overlay topology information, wherein
the communication module is further configured to obtain a first SD-WAN overlay locator route advertised by a second network device, wherein the first SD-WAN overlay locator route comprises a first locator configured by the second network device at an overlay layer; and
a processing module, configured to obtain, based on the first SD-WAN overlay locator route and the SD-WAN overlay topology information, a software-defined wide area network overlay segment routing SD-WAN overlay SR BE path arriving at the second network device.

47. A controller, comprising:
a communication module, configured to obtain software-defined local area network overlay SD-WAN overlay topology information; and
a processing module, configured to obtain an SD-WAN overlay segment routing policy SR policy based on the SD-WAN overlay topology information, wherein the SD-WAN overlay SR policy comprises a segment identifier list SID list corresponding to an SD-WAN overlay SR path, wherein
the communication module is further configured to send the SD-WAN overlay SR policy to the second network device.

48. A first network device, comprising:
a communication module, configured to obtain a virtual private network segment identifier VPN SID corresponding to a virtual private network VPN service packet; and
a processing module, configured to match a SD-WAN overlay locator route based on the VPN SID, to obtain forwarding information of a software-defined wide area network overlay segment routing SD-WAN overlay SR path for forwarding the VPN service packet, wherein
the communication module is further configured to forward the VPN service packet based on the forwarding information.

49. A first network device, comprising:
a communication module, configured to obtain a virtual private network segment identifier VPN SID corresponding to a virtual private network VPN service packet, wherein
the communication module is further configured to obtain an SD-WAN overlay SR policy corresponding to the VPN service packet, wherein the SD-WAN overlay SR policy comprises a SID list corresponding to an SD-WAN overlay SR path; and
a processing module, configured to search an SD-WAN overlay topology or an SD-WAN overlay locator route based on the VPN SID or the SID list that corresponds to the VPN service packet, to obtain forwarding information of the SD-WAN overlay SR path for forwarding the VPN service packet, wherein
the processing module is further configured to forward the VPN service packet based on the forwarding information.

50. A first network device, comprising:
a communication module, configured to obtain first overlay tunnel information sent by a second network device in the SD-WAN, wherein the first overlay tunnel information comprises tunnel node information and tunnel link information of a first overlay tunnel, wherein
the communication module is further configured to obtain second overlay tunnel information sent by a third network device, wherein the second overlay tunnel information comprises tunnel node information and tunnel link information of a second overlay tunnel; and
a processing module, configured to obtain the SD-WAN overlay topology information based on the first overlay tunnel information and the second overlay tunnel information.

51. A network device, comprising:
a memory, configured to store a program; and
a processor, configured to execute the program stored in the memory, and when the program stored in the memory is executed, the processor is configured to perform the method according to any one of claims 1 to 21, the method according to any one of claims 22 to 32, the method according to any one of claims 33 to 37, the method according to any one of claims 38 to 42, or the method according to any one of claims 43 to 45.

52. A communication system, comprising a first node and a second node, wherein
the first node is configured to perform an operation performed by the first node in the method according to any one of claims 1 to 45; and
the second node is configured to perform an operation performed by the second node in the method according to any one of claims 1 to 45.

53. The communication system according to claim 52, further comprising a controller, wherein the controller is configured to perform an operation performed by the controller in the method according to any one of claims 1 to 45.

54. A computer program product, comprising a computer program, wherein when the computer program is run in a processor, the method according to any one of claims 1 to 45 is performed.

55. A computer storage medium, storing instructions, wherein when the instructions are run in a processor, the method according to any one of claims 1 to 45 is performed.
